(19)

Europäisches Patentamt

European Patent Office

Office européen des brevets

(11) **EP 4 510 466 A1**

(12) **EUROPEAN PATENT APPLICATION**
published in accordance with Art. 153(4) EPC

(43) Date of publication:
**19.02.2025   Bulletin 2025/08**

(21) Application number: **23794986.2**

(22) Date of filing: **07.04.2023**

(51) International Patent Classification (IPC):
**H04B 7/155** (2006.01)         **H04L 5/00** (2006.01)
**H04W 72/04** (2023.01)

(52) Cooperative Patent Classification (CPC):
**H04B 7/155; H04L 5/00; H04W 72/04**

(86) International application number:
**PCT/CN2023/086889**

(87) International publication number:
**WO 2023/207553 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **28.04.2022   CN 202210461277**

(71) Applicant: **Huawei Technologies Co., Ltd.
Shenzhen, Guangdong 518129 (CN)**

(72) Inventors:
• **YAN, Mao
  Shenzhen, Guangdong 518129 (CN)**
• **LIU, Fengwei
  Shenzhen, Guangdong 518129 (CN)**

(74) Representative: **Maiwald GmbH
Engineering
Elisenhof
Elisenstrasse 3
80335 München (DE)**

(54) **METHOD AND APPARATUS FOR CONTROLLING RELAY**

(57)     This application provides a relay control method and an apparatus. The method includes: A network device indicates, to a relay device, at least one of the following information: a first beam, forwarding time, an amplification gain, and on-off control, where the first beam is an access-side beam of the relay device, the forwarding time is a time unit for forwarding a first signal, the amplification gain is an amplification multiple or a forwarding power of the first signal, and the on-off control is control on enabling or disabling an amplify-and-forward function. The relay device forwards the first signal for the network device and a terminal device based on the foregoing information, to assist in communication between the network device and the terminal device. According to the method and the apparatus provided in this application, interference to the signal when the relay device forwards the signal can be reduced, improving transmission performance. In addition, based on first information at a time unit granularity, the network device can manage the amplify-and-forward function of the relay device more accurately, further improving the transmission performance.

FIG. 3(a)

| UE | Relay device | Network device |
|---|---|---|
| | | S101: First information |
| S103-a: Send an uplink signal | S103-b: Forward the uplink signal | |

FIG. 3(b)

| UE | Relay device | Network device |
|---|---|---|
| | | S101: First information |
| S102-b: Forward the downlink signal | S102-a: Send a downlink signal | |

FIG. 3(c)

**Description**

This application claims priority to Chinese Patent Application No. 202210461277.9, filed with the China National Intellectual Property Administration on April 28, 2022 and entitled "RELAY CONTROL METHOD AND APPARATUS", which is incorporated herein by reference in its entirety.

**TECHNICAL FIELD**

This application relates to the field of wireless communication, and more specifically, to a relay control method and an apparatus.

**BACKGROUND**

In a scenario in which a relay device assists in communication between a network device and a terminal device, when the relay device forwards a signal, an amplification circuit of the relay device causes noise to the signal. The relay noise transmitted to a receive end causes noise interference to the receive end, affecting performance of transmission between the network device and the terminal device. Therefore, how to reduce the interference to the signal when the relay device forwards the signal becomes an urgent problem to be resolved.

**SUMMARY**

This application provides a relay control method and an apparatus, to improve performance of transmission between a network device and a terminal device.

According to a first aspect, a relay control method is provided. The method may be performed by a relay device, or may be performed by a component (for example, a chip or a circuit) of the relay device. This is not limited in this application. For ease of description, the following uses an example in which the relay device performs the method for description.

The method may include: The relay device receives first information from a network device, where the first information includes downlink control information, the downlink control information indicates at least one of the following information: a first beam, forwarding time, an amplification gain, and on-off control, the first beam is an access-side beam of the relay device, the forwarding time is a time unit for forwarding a signal, the amplification gain is an amplification multiple or a forwarding power of a signal, and the on-off control is control on enabling or disabling an amplify-and-forward function; the relay device receives a first signal from the network device or a terminal device; and the relay device forwards the first signal based on the first information.

Based on the foregoing solution, in a scenario in which the relay assists in communication between the network device and the terminal device, the amplify-and-forward function of the relay is directly managed by using the network device, for example, parameters such as the first beam, the forwarding time, the amplification gain, and the on-off control are directly controlled, so that interference to the signal when the relay device forwards the signal can be reduced, improving transmission performance. In addition, based on the first information at a time unit granularity, the network device can manage the amplify-and-forward function of the relay device more accurately, further improving the transmission performance.

With reference to the first aspect, in some implementations of the first aspect, the first information further includes a radio resource control message, the radio resource control message is used to determine a relay amplify-and-forward time set and/or configuration information of the relay amplify-and-forward time set, and the relay amplify-and-forward time set includes the forwarding time.

Based on the foregoing solution, joint indication of the radio resource control message and the downlink control information enables the network device to manage the relay device more flexibly, quickly, and timely, further improving transmission performance.

With reference to the first aspect, in some implementations of the first aspect, the radio resource control message includes at least two of the following: a first field, a second field, and a third field, where the first field indicates a slot configuration list included in the relay amplify-and-forward time set, the second field indicates a slot amplify-and-forward configuration, and the third field indicates a forwarding beam configuration list.

With reference to the first aspect, in some implementations of the first aspect, the radio resource control message is further used to determine a duration of the relay amplify-and-forward time set.

With reference to the first aspect, in some implementations of the first aspect, the relay amplify-and-forward time set further corresponds to start time of the relay amplify-and-forward time set, and the method further includes: The relay device determines the start time based on time at which the downlink control information is received and effective time, where the effective time is a time interval between the time at which the relay device receives the downlink control information and the start time.

With reference to the first aspect, in some implementations of the first aspect, the method further includes: The relay device determines the effective time based on capability information of the relay device. Alternatively, the method further includes: The relay device sends capability information of the relay device to the network device; and the relay device receives the effective time from the network device.

With reference to the first aspect, in some implementations of the first aspect, that the relay device determines the effective time based on capability information of the relay device includes: The relay device determines the effective time based on the capability information of the relay device and second information, where the second information includes at least one of the following: a subcarrier spacing and a carrier frequency range.

With reference to the first aspect, in some implementations of the first aspect, in a case that the first information includes the downlink control information and the radio resource control message, the method further includes: The relay device determines a size of the downlink control information based on the duration and at least one of the second field and the third field.

With reference to the first aspect, in some implementations of the first aspect, the configuration information of the amplify-and-forward time set takes effect periodically, and a time interval for the configuration information of the amplify-and-forward time set to take effect is the duration.

With reference to the first aspect, in some implementations of the first aspect, the first information indicates to forward a signal based on the first beam within the forwarding time; or the first information indicates to forward a signal based on the amplification gain within the forwarding time; or the first information indicates to forward a signal based on the first beam and the amplification gain; or the first information indicates to forward a signal in a time unit in which the on-off control indicates to enable the amplify-and-forward function and that is in the forwarding time; or the first information indicates to forward a signal based on the first beam in a time unit in which the on-off control indicates to enable an amplification function; or the first information indicates to forward a signal based on the amplification gain in a time unit in which the on-off control indicates to enable an amplification function; or the first information indicates to forward a signal based on the first beam and the amplification gain within the forwarding time; or the first information indicates to forward a signal based on the amplification gain and the first beam in a time unit in which the on-off control indicates to enable an amplification function; or the first information indicates to forward a signal based on the first beam in a time unit in which the on-off control indicates to enable the amplify-and-forward function and that is in the first forwarding time; or the first information indicates to forward a signal based on the amplification gain in a time unit in which the on-off control indicates to enable the amplify-and-forward function and that is in the first forwarding time; or the first information indicates to forward a signal based on the first beam and the amplification gain in a time unit in which the on-off control indicates to enable the amplify-and-forward function and that is in the first forwarding time.

With reference to the first aspect, in some implementations of the first aspect, the first information further indicates a forwarding direction, and the forwarding direction includes uplink forwarding and/or downlink forwarding.

With reference to the first aspect, in some implementations of the first aspect, the first information indicates to forward a signal corresponding to the forwarding direction based on the first beam within the forwarding time; or the first information indicates to forward a signal corresponding to the forwarding direction based on the amplification gain within the forwarding time; or the first information indicates to forward a signal corresponding to the forwarding direction based on the first beam and the amplification gain; or the first information indicates to forward a signal corresponding to the forwarding direction in a time unit in which the on-off control indicates to enable the amplify-and-forward function and that is in the forwarding time; or the first information indicates to forward a signal corresponding to the forwarding direction based on the first beam in a time unit in which the on-off control indicates to enable an amplification function; or the first information indicates to forward a signal corresponding to the forwarding direction based on the amplification gain in a time unit in which the on-off control indicates to enable an amplification function; or the first information indicates to forward a signal corresponding to the forwarding direction based on the first beam and the amplification gain within the forwarding time; or the first information indicates to forward a signal corresponding to the forwarding direction based on the amplification gain and the first beam in a time unit in which the on-off control indicates to enable an amplification function; or the first information indicates to forward a signal corresponding to the forwarding direction based on the first beam in a time unit in which the on-off control indicates to enable the amplify-and-forward function and that is in the first forwarding time; or the first information indicates to forward a signal corresponding to the forwarding direction based on the amplification gain in a time unit in which the on-off control indicates to enable the amplify-and-forward function and that is in the first forwarding time; or the first information indicates to forward a signal corresponding to the forwarding direction based on the first beam and the amplification gain in a time unit in which the on-off control indicates to enable the amplify-and-forward function and that is in the first forwarding time.

According to a second aspect, a relay control method is provided. The method may be performed by a network device, or may be performed by a component (for example, a chip or a circuit) of the network device. This is not limited in this application. For ease of description, the following uses an example in which the network device performs the method for description.

The method may include: The network device sends first information to a relay device, where the first information includes downlink control information, the downlink control information indicates at least one of the following information: a first beam, forwarding time, an amplification gain, and on-off control, the first beam is an access-side beam of the relay device, the forwarding time is a time unit for forwarding a signal, the amplification gain is an amplification multiple or a forwarding power of a signal, and the on-off control is control on enabling or disabling an amplify-and-forward function; and the network device sends a first signal to the relay device, or the network device receives the first signal from the relay device.

With reference to the second aspect, in some implementations of the second aspect, the first information further includes a radio resource control message, the radio resource control message is used to determine a relay amplify-and-forward time set and/or configuration information of the relay amplify-and-forward time set, and the relay amplify-and-forward time set includes the forwarding time.

With reference to the second aspect, in some implementations of the second aspect, the radio resource control message includes at least two of the following: a first field, a second field, and a third field, where the first field indicates a slot configuration list included in the relay amplify-and-forward time set, the second field indicates a slot amplify-and-forward configuration, and the third field indicates a forwarding beam configuration list.

With reference to the second aspect, in some implementations of the second aspect, the radio resource control message is further used to determine a duration of the relay amplify-and-forward time set.

With reference to the second aspect, in some implementations of the second aspect, the method further includes: The network device receives capability information of the relay device from the relay device; the network device determines effective time based on the capability information of the relay device, where the effective time is a time interval between time at which the relay device receives the first information and start time of the relay amplify-and-forward time set; and the network device sends the effective time to the relay device.

With reference to the second aspect, in some implementations of the second aspect, that the network device determines effective time based on the capability information of the relay device includes: The network device determines the effective time based on the capability information of the relay device and second information, where the second information further includes at least one of the following: a subcarrier spacing and a carrier frequency range.

With reference to the second aspect, in some implementations of the second aspect, the first information further includes indication information, the indication information indicates that the configuration information of the amplify-and-forward time set takes effect periodically, and a time interval for the configuration information of the amplify-and-forward time set to take effect is the duration.

With reference to the second aspect, in some implementations of the second aspect, the first information indicates to forward a signal based on the first beam within the forwarding time; or the first information indicates to forward a signal based on the amplification gain within the forwarding time; or the first information indicates to forward a signal based on the first beam and the amplification gain; or the first information indicates to forward a signal in a time unit in which the on-off control indicates to enable the amplify-and-forward function and that is in the forwarding time; or the first information indicates to forward a signal based on the first beam in a time unit in which the on-off control indicates to enable an amplification function; or the first information indicates to forward a signal based on the amplification gain in a time unit in which the on-off control indicates to enable an amplification function; or the first information indicates to forward a signal based on the first beam and the amplification gain within the forwarding time; or the first information indicates to forward a signal based on the amplification gain and the first beam in a time unit in which the on-off control indicates to enable an amplification function; or the first information indicates to forward a signal based on the first beam in a time unit in which the on-off control indicates to enable the amplify-and-forward function and that is in the first forwarding time; or the first information indicates to forward a signal based on the amplification gain in a time unit in which the on-off control indicates to enable the amplify-and-forward function and that is in the first forwarding time; or the first information indicates to forward a signal based on the first beam and the amplification gain in a time unit in which the on-off control indicates to enable the amplify-and-forward function and that is in the first forwarding time.

With reference to the second aspect, in some implementations of the second aspect, the first information further indicates a forwarding direction, and the forwarding direction includes uplink forwarding and/or downlink forwarding.

With reference to the second aspect, in some implementations of the second aspect, the first information indicates to forward a signal corresponding to the forwarding direction based on the first beam within the forwarding time; or the first information indicates to forward a signal corresponding to the forwarding direction based on the amplification gain within the forwarding time; or the first information indicates to forward a signal corresponding to the forwarding direction based on the first beam and the amplification gain; or the first information indicates to forward a signal corresponding to the forwarding direction in a time unit in which the on-off control indicates to enable the amplify-and-forward function and that is in the forwarding time; or the first information indicates to forward a signal corresponding to the forwarding direction based on the first beam in a time unit in which the on-off control indicates to enable an amplification function; or the first information indicates to forward a signal corresponding to the forwarding direction based on the amplification gain in a time unit in which the on-off control indicates to enable an amplification function; or the first information indicates to forward a signal corresponding to the forwarding direction based on the first beam and the amplification gain within the forwarding time; or

the first information indicates to forward a signal corresponding to the forwarding direction based on the amplification gain and the first beam in a time unit in which the on-off control indicates to enable an amplification function; or the first information indicates to forward a signal corresponding to the forwarding direction based on the first beam in a time unit in which the on-off control indicates to enable the amplify-and-forward function and that is in the first forwarding time; or the first information indicates to forward a signal corresponding to the forwarding direction based on the amplification gain in a time unit in which the on-off control indicates to enable the amplify-and-forward function and that is in the first forwarding time; or the first information indicates to forward a signal corresponding to the forwarding direction based on the first beam and the amplification gain in a time unit in which the on-off control indicates to enable the amplify-and-forward function and that is in the first forwarding time. For beneficial effects of the second aspect and the possible implementations, refer to the related descriptions of the first aspect. Details are not described herein again.

According to a third aspect, a relay control apparatus is provided. The apparatus is configured to perform the method in any possible implementation of the first aspect or the second aspect. Specifically, the apparatus may include units and/or modules, for example, a processing unit and/or a communication unit, configured to perform the method in any possible implementation of the first aspect or the second aspect.

In an implementation, the apparatus is a communication device (for example, a network device or a terminal device). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a network device or a terminal device). When the apparatus is a chip, a chip system, or a circuit used in a communication device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a relay control apparatus is provided. The apparatus includes at least one processor, configured to execute a computer program or instructions stored in a memory, to perform the method in any possible implementation of the first aspect or the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a network device or a terminal device).

In another implementation, the apparatus is a chip, a chip system, or a circuit used in a communication device (for example, a network device or a terminal device).

According to a fifth aspect, this application provides a processor, configured to perform the method provided in the first aspect or the second aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable medium stores program code to be executed by a device, and the program code is used to perform the method in any possible implementation of the first aspect or the second aspect.

According to a seventh aspect, a computer program product including instructions is provided. When the computer program product runs on a computer, the computer is enabled to perform the method in any possible implementation of the first aspect or the second aspect.

According to an eighth aspect, a communication system is provided, including the foregoing network device and the foregoing relay device.

**BRIEF DESCRIPTION OF DRAWINGS**

FIG. 1(a), FIG. 1(b), and FIG. 1(c) are respectively diagrams of hardware structures of a terminal device, a network device, and a relay device;
FIG. 2(a) and FIG. 2(b) each are a diagram of amplifying and forwarding a signal by a relay;
FIG. 3(a) to FIG. 3(c) each are a schematic block diagram of a relay control method 100 for a network device according to this application;
FIG. 4(a) to FIG. 4(d) each are a diagram of time related to first information;

FIG. 5(a) to FIG. 5(c) each are a diagram of effective time k and a duration T;

FIG. 6 is a diagram of effective time k and a duration T;

FIG. 7(a) and FIG. 7(b) each are a diagram in which first information indicates a beam index;

FIG. 8(a) to FIG. 8(h) each are a diagram in which first information indicates a beam index and forwarding time;

FIG. 9(a) to FIG. 9(d) each are a diagram in which first information indicates an amplification gain;

FIG. 10 is a diagram in which first information indicates on-off control;

FIG. 11(a) and FIG. 11(b) each are a diagram in which first information jointly indicates a beam and an amplification gain;

FIG. 12 is a diagram of a beam coverage range;

FIG. 13 is a diagram of a relay control apparatus 200 according to an embodiment of this application;

FIG. 14 is a diagram of another relay control apparatus 300 according to an embodiment of this application; and

FIG. 15 is a diagram of a chip system 400 according to an embodiment of this application.

## DESCRIPTION OF EMBODIMENTS

The following describes technical solutions of this application with reference to accompanying drawings.

Embodiments of this application may be applied to a 5th generation (5th generation, 5G) mobile communication system, a 6th generation (6th generation, 6G) mobile communication system, a Wi-Fi system, or a future mobile communication system.

A base station (base station) or a network device in this application may be an evolved NodeB (evolved NodeB, eNodeB), a transmission reception point (transmission reception point, TRP), a next generation base station (next generation NodeB, gNB) in the 5G mobile communication system, a next generation base station in the 6G mobile communication system, a base station in the future mobile communication system, an access node in the Wi-Fi system, or the like; or may be a module or a unit that implements some functions of a base station.

A terminal device (user equipment, UE) in this application is a device having a wireless transceiver function, and may send a signal to a base station or receive a signal from a base station. The UE may also be referred to as a terminal, a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

A relay or a relay device in this application has a signal forwarding function, and can amplify a signal. The relay may further shift a carrier frequency of a signal; demodulate a signal, re-modulate a signal after demodulation and then forward the signal; or may perform noise reduction on a signal for forwarding. Therefore, the relay may be in any one of the following forms: amplification and forwarding, demodulation and forwarding, frequency shift and forwarding, and noise reduction and forwarding. In addition, the relay has another form, which is referred to as a reflector or a reflecting surface, or may have other possible names: an intelligent reflecting surface (intelligent reflecting surface), a reflecting array, an intelligent reflecting array (intelligent reflecting array), a reflector, an intelligent reflector, a backscatter device (backscatter device), a passive device (passive device), a semi-active device (semi-passive device), and an ambient signal device (ambient signal device). The relay may alternatively be considered as a terminal device in a special form. If a capability of controlling a relay by a network side is considered, relays may be classified into a non-intelligent relay and an intelligent relay, or may be classified into an uncontrolled repeater (uncontrolled repeater) and a network controlled repeater (network controlled repeater, NetConRepeater). A network device may control the intelligent relay to perform more performance enhancement functions, for example, relay transmit power control, relay amplification gain control, relay beam scanning control, and relay precoding control.

In embodiments of this application, a function of a base station may alternatively be performed by a module (for example, a chip) in the base station, or may be performed by a control subsystem including the function of the base station. The control subsystem herein including the function of the base station may be a control center in the foregoing application scenarios, such as the smart grid, the industrial control, the smart transportation, and the smart city. A function of a terminal may alternatively be performed by a module (for example, a chip or a modem) in the terminal, or may be performed by an apparatus including the function of the terminal. A function of a relay may alternatively be performed by a module (for example, a chip or a modem) in the relay, or may be performed by an apparatus including the function of the relay.

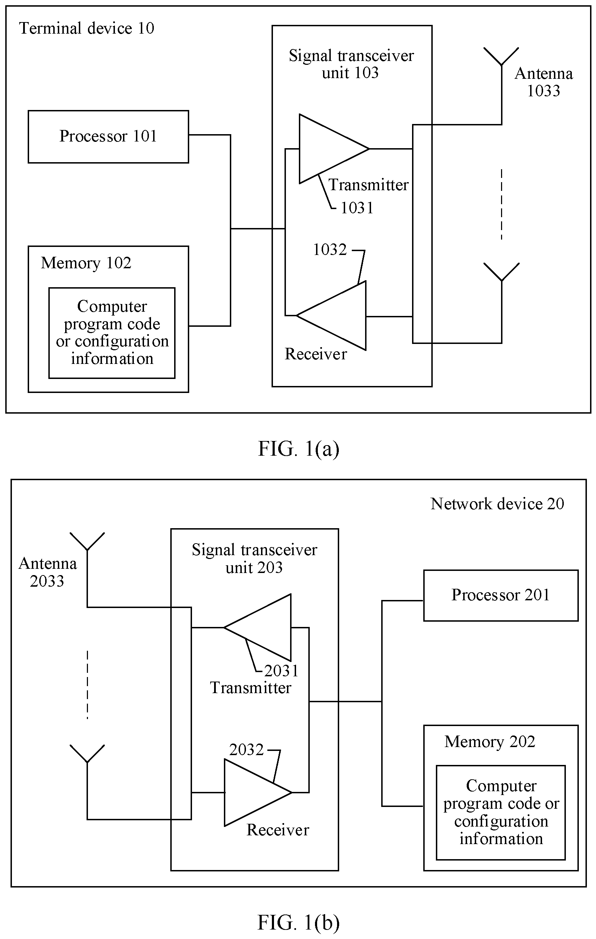

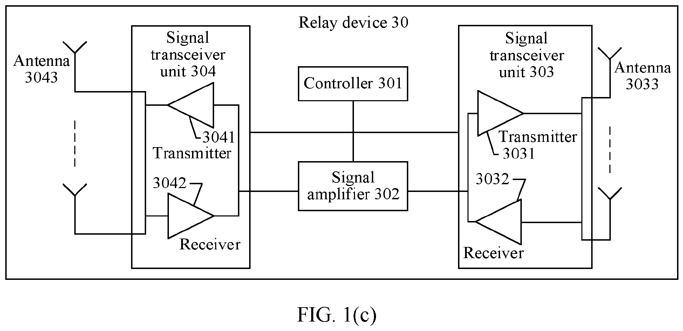

The following separately describes structures of a terminal device, a network device, and a relay device with reference to FIG. 1(a) to FIG. 1(c). FIG. 1(a), FIG. 1(b), and FIG. 1(c) are respectively diagrams of hardware structures of the terminal device, the network device, and the relay device. As shown in FIG. 1(a), the terminal device 10 includes a processor 101, a memory 102, and a transceiver 103. The transceiver 103 includes a transmitter 1031, a receiver 1032, and an antenna 1033. As shown in FIG. 1(b), the network device 20 includes a processor 201, a memory 202, and a transceiver 203. The transceiver 203 includes a transmitter 2031, a receiver 2032, and an antenna 2033. The receiver 1032 may be configured to receive transmission control information through the antenna 1033, and the transmitter 1031 may be configured to send transmission information to the network device 20 through the antenna 1033. The transmitter 2031 may be configured to send transmission control configuration information to the terminal device 10 through the antenna 2033, and the receiver 2032 may be configured to receive, through the antenna 2033, transmission information sent by the terminal device 10. As shown in FIG. 1(c), the relay 30 logically includes a plurality of parts, including one or more of signal transceiver units 303 and 304, a controller 301, a signal amplifier 302, and the like, and is configured to implement communication and signaling exchange with a network device and a terminal device, signal amplification, and the like. The signal transceiver unit 303 includes a transmitter 3031, a receiver 3032, and an antenna 3033. The signal transceiver unit 304 includes a transmitter 3041, a receiver 3042, and an antenna 3043. A controller of the relay device is also referred to as a mobile terminal (mobile terminal, MT), a terminal (Terminal), or a fixed terminal (fixed terminal, FT), and block diagrams of other parts may form a radio unit (radio unit, RU), a distributed unit (distributed unit, DU), a distributed radio unit (distributed radio unit, DRU), or the like. For example, during downlink communication, one signal transceiver unit is configured to receive a signal of the network device 20, and another signal transceiver unit is configured to forward an amplified received signal to the terminal device 10. In addition, the controller may further communicate with the network device 20 or the terminal device 10 via the signal transceiver unit 303 or 304. For example, the controller communicates with a base station by using the signal transceiver unit, and is configured to establish a communication link and beam alignment between the relay and the base station; and may be further configured to receive configuration/indication information of the base station, so that the base station controls working time, a working status, a working manner, or the like of the relay, or configured to receive a trigger signal of the terminal, so that the relay enters a corresponding working mode as required. For another example, the controller may further determine a working status (for example, an amplification multiple or a phase) of a signal amplifier based on indication information of the base station or measurement information of the controller. It should be understood that a quantity of each type of unit may be one or more. For example, there are a plurality of signal amplifiers, respectively corresponding to different polarization directions or relay radio frequency channels.

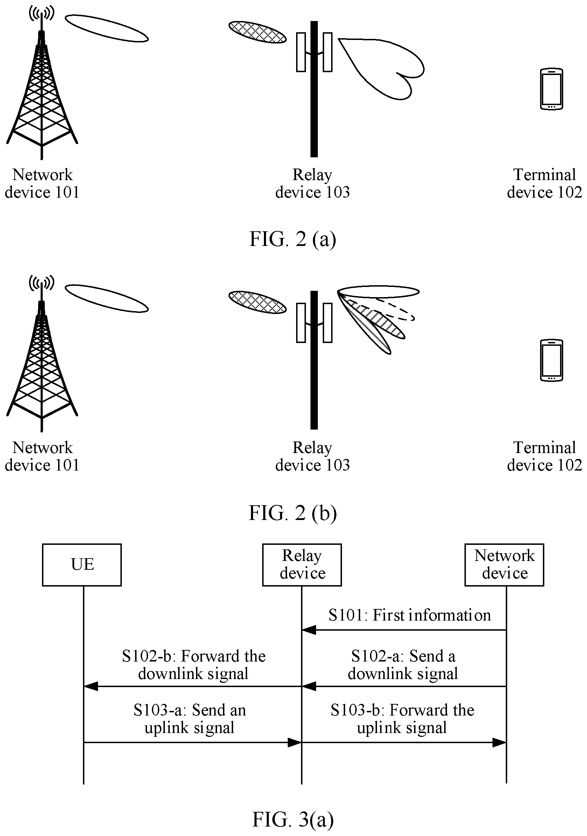

A network device and a UE may directly communicate with each other. However, because a path loss between the network device and the UE is high, the UE may not be able to directly communicate with the network device. A simple method is to assist in communication between the base station and the UE by using a relay. A relay method with low complexity is that the relay directly amplifies a received signal and then forwards the signal. As shown in (a) and (b) in FIG. 2, when a distance between a network device 101 and a terminal device 102 is long, a relay device 103 is added to a communication system, so that the relay device 103 assists in communication between the network device 101 and the terminal device 102. Generally, there are two antenna panels (or two antennas) on the relay device side. One antenna panel (or one antenna) is used by the relay device 103 to communicate with the network device 101 (where the antenna panel is referred to as a backhaul-side antenna panel, or the antenna is referred to as a backhaul-side antenna), and the other antenna panel (or the other antenna) is used by the relay device 103 to communicate with the terminal device 102 (where the antenna panel is referred to as an access-side antenna panel, or the antenna is referred to as an access-side antenna). In consideration of a beam capability of the access-side antenna panel, forwarding is further classified into single-beam forwarding ((a) in FIG. 2) and multi-beam forwarding ((b) in FIG. 2). As shown in (b) in FIG. 2, each antenna panel of the relay device may include a plurality of (including two or more) antennas, and a beam may be formed on a single antenna panel. After amplifying a signal from the network device 101 by using a backhaul-side beam of the relay device 103, the relay device forwards an amplified signal to the terminal device by using an access-side beam. When forwarding the signal by using the access-side beam of the relay device 103, the relay device needs to align the beam with the terminal device 102, to obtain good transmission performance. When forwarding the signal, the relay device amplifies and forwards the signal, thereby causing noise to the signal. When the noise generated by the relay is transmitted to a receive end, noise interference is caused to the receive end. In a network, if the relay amplifies the signal by an excessively high multiple, an output power for forwarding the signal by the relay is high. This may cause interference. Moreover, a relay power amplifier may even enter a saturation area, and the forwarded signal is distorted, so that the receive end cannot correctly demodulate the signal.

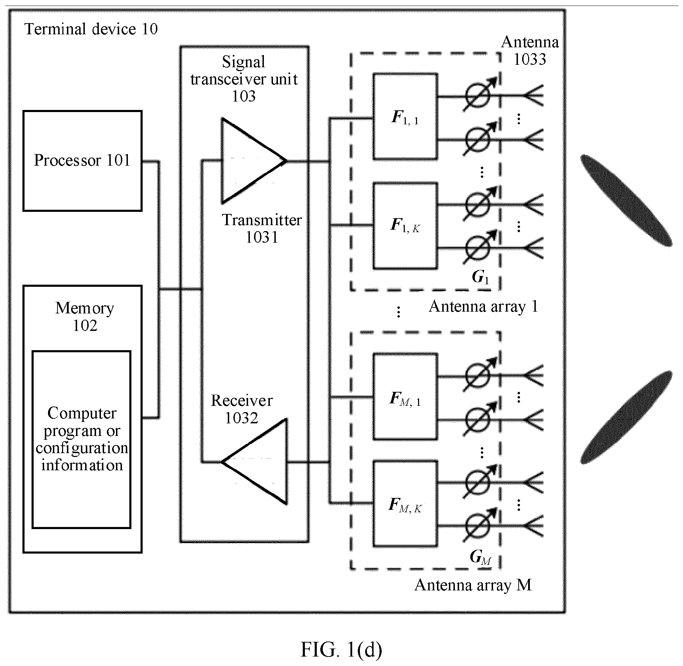

For example, it is considered that a terminal side has a beam capability (for example, a high-frequency terminal). It is considered that the terminal can face a plurality of directions, as shown in FIG. 1(d). FIG. 1(d) is a diagram of a hardware structure of a terminal in a plurality of directions. In the antenna 1033 module in FIG. 1(d), one block represents one digital channel, and F in the block is a digital precoding weight; and one phase shifter (a circle with an oblique arrow) represents one analog channel and is connected to one element. In practice, one phase shifter may control a plurality of elements, or the phase shifter and the elements are cross-connected. A radiation signal of an antenna array 1 faces a first direction (that is, corresponds to a first spatial filter), ..., and a radiation signal of an antenna array M faces an $M^{th}$ direction (that is, corresponds to an $M^{th}$ spatial filter). In FIG. 1(d), it may be considered that there are $M$ spatial filters, and a spatial filter $m$

may refer to a digital weight $F_m = [F_{m,1}; ... ; F_{m,K}]$, an analog weight $G_m$, or a hybrid modulus weight $F_mG_m$ in the figure. In another implementation, it may be considered that spatial filters of any $L$ antenna arrays constitute a spatial filter. For example, $M$ antenna arrays constitute a spatial filter, which specifically refers to any one of the following: $[F_1; ... ; F_M]$, $[G_1; ... ; F_M]$, and $[F_1G_1; ... ; F_MG_M]$.

The diagrams of the hardware structures of the network device and the relay are similar to FIG. 1(d).

Currently, a network device can directly manage a terminal device. However, in a scenario in which the network device communicates with the terminal device via a relay device, there is no corresponding solution how the network device directly manages the relay.

For ease of understanding of this application, the following describes some technical terms in this application.

1. Beam (beam): Beams are communication resources. Beams may be wide beams, narrow beams, or other types of beams. A technology for forming a beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent by using different beams. Optionally, a plurality of beams having a same or similar communication feature may be considered as one beam. One beam may include one or more antenna ports, configured for transmission of a data channel, a control channel, a sounding signal, and the like. For example, a transmit beam may be distribution of signal strength formed in different directions in space after a signal is transmitted through an antenna, and a receive beam may be distribution of signal strength that is in different directions in space and that is of a radio signal received from an antenna. It may be understood that one or more antenna ports forming one beam may also be considered as an antenna port set.

When a low frequency band or an intermediate frequency band is used, a signal may be sent omnidirectionally or at a wide angle. When a high frequency band is used, because of a small carrier wavelength of a high-frequency communication system, an antenna array formed by a plurality of antenna elements may be disposed at a transmit end and a receive end. The transmit end sends a signal by a specific beamforming weight, to enable the sent signal to form a spatially directional beam, and the receive end receives the signal using the antenna array by a specific beamforming weight, so that receive power of the signal at the receive end can be increased, and path loss can be avoided.

Beams are classified into a transmit beam and a receive beam. The transmit beam may be distribution of signal strength formed in different directions in space after a signal is transmitted through an antenna, and the receive beam may be distribution in which an antenna array enhances or weakens reception of a radio signal in different directions in space.

In a current NR protocol, a beam may be represented by an antenna port quasi-colocation (quasi-colocation, QCL) relationship. Specifically, there is a QCL relationship about a spatial receive parameter (spatial Rx parameter) between signals of two identical beams, namely, QCL-Type D: {Spatial Rx parameter} as specified in the protocol. The beam may be specifically represented by identifiers of various signals in the protocol, for example, a resource index of a channel state information reference signal (channel state information reference signal, CSI-RS), an index of a synchronization signal/broadcast channel block (synchronous signal/physical broadcast channel block, SS/PBCH block or SSB), a resource index of a sounding reference signal (sounding reference signal, SRS), and a resource index of a tracking reference signal (tracking reference signal, TRS).

Typically, beams are corresponding to resources. For example, when beam measurement is performed, a radio access network device sends different resources by using different beams, and the terminal feeds back measured resource quality, so that the radio access network device knows quality of a corresponding beam. During data transmission, beam information is also indicated by a resource corresponding to the beam information. For example, the radio access network device indicates information about a beam used by the terminal to receive a physical downlink shared channel (physical downlink shared channel, PDSCH) by using a transmission configuration indication (transmission configuration indication, TCI) field in downlink control information (downlink control information, DCI).

2. Quasi-colocation (Quasi-Colocation, QCL): A quasi-colocation QCL relationship is used to indicate that a plurality of resources have one or more same or similar communication features. For a plurality of resources having a quasi-colocation relationship, a same or similar communication configuration may be used. Specifically, signals corresponding to antenna ports that have a QCL relationship have a same parameter; or a parameter (which may also be referred to as a QCL parameter) of an antenna port may be used to determine a parameter of another antenna port that has a QCL relationship with the antenna port; or two antenna ports have a same parameter; or a parameter difference between two antenna ports is less than a threshold. The parameter may include one or more of the following: a delay spread (delay spread), a Doppler spread (Doppler spread), a Doppler shift (Doppler shift), an average delay (average delay), an average gain, and a spatial receive parameter (spatial Rx parameter). The spatial receive parameter may include one or more of the following: an angle of arrival (angle of arrival, AOA for short), an average AOA, an AOA spread, an angle of departure (angle of departure, AOD for short), an average angle of departure AOD, an AOD spread, a receive antenna spatial correlation parameter, a transmit antenna spatial correlation parameter, a transmit beam, a receive beam, and a resource identifier.

3. Amplification gain: The amplification gain is applicable to a relay and can correspond to power control. For example, if a receive power of a received signal is P_R (unit: decibel-milliwatt (dBm)) and an amplification gain is G (unit: decibel (dB)), an output power (namely, a transmit power) is P_T = G + P_R (unit: decibel-milliwatt (dBm)). In a communication system related to a reflecting surface, the amplification gain may be correspondingly a reflection loss.

4. On-off control: The on-off control is also referred to as switch management or ON-OFF control, for controlling a relay to enable or disable amplification and forwarding, and may be further divided into uplink on-off control and downlink on-off control.

5. Time unit: The time unit refers to a unit of time. For example, the time unit in this application may include but is not limited to a subframe (subframe), a slot (slot), a symbol, a physical slot, an available slot, a first symbol of a slot, a first symbol of a physical slot, a first symbol of an available slot, or the like. The symbol (for example, the first symbol) may be a time domain symbol (for example, an orthogonal frequency division multiplexing (orthogonal frequency division multiplexing, OFDM) symbol) or the like.

FIG. 3(a) to FIG. 3(c) each are a schematic block diagram of a relay control method 100 according to this application.

As shown in FIG. 3(a), first information is used to manage forwarding of an uplink signal and a downlink signal by a relay.

S101: A network device sends the first information to the relay device, and correspondingly, the relay device receives the first information from the network device. The first information indicates at least one of the following information: a beam, forwarding time, an amplification gain, on-off control, and a forwarding direction.

The beam indicated by the first information is a beam used when the relay device subsequently forwards a signal. The forwarding time is one or more time units in which the relay device forwards the signal, for example, may be one or more slots or one or more OFDM symbols. The amplification gain is an amplification gain used when the relay device forwards the signal. The amplification gain herein may also be an amplification multiple or a forwarding power of the signal. The on-off control may be understood as control on enabling or disabling an amplify-and-forward function of the relay. The forwarding direction includes uplink forwarding and/or downlink forwarding, and the network device may separately control, by using the first information, the relay to forward a downlink signal and/or an uplink signal. The downlink forwarding means that the network device sends a signal to the relay device, and the relay device forwards the signal to the terminal device. The uplink forwarding means that the terminal device sends a signal to the relay device, and the relay device forwards the signal to the network device.

It should be understood that a forwarding direction of a first signal includes uplink forwarding and/or downlink forwarding. For example, in a case that the forwarding direction of the first signal is the downlink forwarding, refer to S102-a and S102-b; or in a case that the forwarding direction of the first signal is the uplink forwarding, refer to S103-a and S103-b.

It should be understood that the beam indicated by the first information may be an access-side beam, or a beam pair including a backhaul-side beam and an access-side beam. Generally, the backhaul-side beam is fixed. To be specific, the relay may perform communication based on the fixed backhaul-side beam within a long time period. There may be some cases, for example, the relay has an online real-time isolation measurement capability. In this case, matching between an optimal access-side beam and an optimal backhaul-side beam may be involved, and switching of both the access-side beam and the backhaul-side beam may be considered. When the backhaul-side beam is fixed, the beam indicated by the first information is the access-side beam. When the backhaul-side beam is not fixed, the backhaul-side beam is paired with the access-side beam. Pairing information is agreed between the relay and the network device in advance. In this case, the first information indicates both the backhaul-side beam and the access-side beam. In both cases, indication may be performed based on the access-side beam. Therefore, in this embodiment of this application, an example in which the first information indicates the access-side beam is used for description.

Optionally, when the forwarding time includes a plurality of time units, information such as beams, amplification gains, on-off control, and forwarding directions corresponding to different time units in the forwarding time may be the same or may be different. In other words, control performed by the network device on the relay may be accurate to a level of one time unit.

For example, the first information herein may include indication information and/or configuration information. The indication information may be one or a combination of the following: a media access control-control element (media access control-control element, MAC-CE), downlink control information (downlink control information, DCI), radio resource control (radio resource control, RRC), and system information. The configuration information may be configured by the network device and delivered to the terminal device or the relay. The configuration information may be carried on any one of a physical broadcast channel (physical broadcast channel, PBCH), remaining minimum system information (remaining minimum system information, RMSI), a system information block (system information block, SIB)1, a SIB2, a SIB3, a media access control-control element (media access control-control element, MAC-CE), downlink control information (downlink control information, DCI), radio resource control (radio resource control, RRC), and system information.

S102-a: The network device sends a downlink signal to the relay device, and correspondingly, the relay device receives the downlink signal from the network device.

S102-b: The relay device forwards the downlink signal to a UE based on the first information, and correspondingly, the UE receives the downlink signal from the relay device.

S103-a: The UE sends an uplink signal to the relay device, and correspondingly, the relay device receives the uplink signal from the UE.

S103-b: The relay device forwards the uplink signal to the network device based on the first information, and correspondingly, the network device receives the uplink signal from the relay device.

It should be noted that, in a scenario in which the first information can be used to control the relay device to forward the uplink signal and the downlink signal, FIG. 3(a) is merely an example, and is not limited to a case that S102-a, 2-2, S103-a, and 3-2 need to be performed. To be specific, only S101, S102-a, and S102-b may be performed, or only S101, S103-a, and S103-b may be performed.

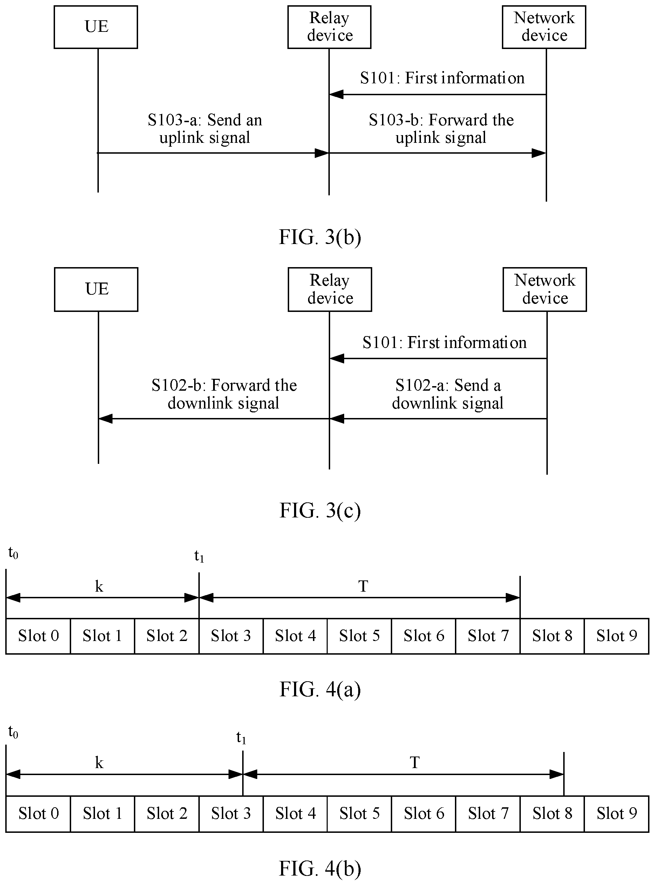

As shown in FIG. 3(b), the first information is only used to manage forwarding of the uplink signal by the relay, only S101, S103-a, and S103-b in FIG. 3(a) are performed, and the forwarding direction indicated in the first information is uplink. As shown in FIG. 3(c), the first information is used to manage forwarding of the downlink signal by the relay, only S101, S102-a, and S102-b in FIG. 3(a) are performed, and the forwarding direction indicated in the first information is downlink.

In this embodiment of this application, in a scenario in which the relay assists in communication between the network device and the terminal device, an amplify-and-forward function of the relay is directly managed by using the network, so that interference to the signal when the relay device forwards the signal can be reduced, improving transmission performance.

The following further describes the first information in the method 100 from four aspects by using specific examples.

First aspect: The first information includes downlink control information. Optionally, the first information further includes a radio resource control message, where the radio resource control message is used to determine a relay amplify-and-forward time set and/or configuration information of the relay amplify-and-forward time set, and the relay amplify-and-forward time set includes the forwarding time. The downlink control information indicates at least one of the following information: a first beam, the forwarding time, the amplification gain, and the on-off control.

It should be understood that the relay amplify-and-forward time set is a set of one or more time units, and in the time set, the relay amplifies and forwards the first signal. For example, the time set may correspond to a time window, or the time set may correspond to a time period, or the time set may include one or more inconsecutive time units.

It should be understood that in this application, the time unit may be a slot. For example, a duration of a slot may be 1 ms, 0.5 ms, 0.25 ms, 0.125 ms, or the like.

It should be understood that in this application, the time unit may alternatively be one or more OFDM symbols.

In the present invention, discussion is mainly based on a case that the forwarding time is a slot. In practice, the forwarding time may be replaced with any other time unit.

For example, the relay amplify-and-forward time set includes the forwarding time, and signals amplified and forwarded by the relay device in the time set include the first signal.

> a. That the radio resource control message is used to determine the relay amplify-and-forward time set may be understood as that the radio resource control message is used to determine a duration of the relay amplify-and-forward time set, or the relay device may determine the duration of the relay amplify-and-forward time set based on the radio resource control message. The duration of the relay amplify-and-forward time set may be understood as a quantity of time units included in the relay amplify-and-forward time set.

For example, the radio resource control message includes at least two of the following: a first field, a second field, and a third field, where the first field indicates a slot configuration list included in the relay amplify-and-forward time set, the second field indicates a slot amplify-and-forward configuration, and the third field indicates a forwarding beam configuration list. For example, the duration of the relay amplify-and-forward time set may be determined based on the first field and the third field, or may be determined based on the first field, the second field, and the third field, or may be determined based on the first field and the second field. For a specific implementation, refer to the following examples 1 to 3 of (1) in "a. The first information indicates a duration of the relay amplify-and-forward time set, or a quantity of slots included in the relay amplify-and-forward time set" in "1. How the first information indicates the relay amplify-and-forward time set". Details are not described herein.

Optionally, the relay amplify-and-forward time set further corresponds to start time of the relay amplify-and-forward time set, and the start time of the relay amplify-and-forward time set may be understood as time corresponding to a first time unit in the relay amplify-and-forward time set. For example, the relay may determine the start time of the relay amplify-and-forward time set in an existing manner, where the start time may be understood as the first time unit in the time set.

b. That the radio resource control message is used to determine configuration information of the relay amplify-and-forward time set may be understood as that the radio resource control message includes or is used to determine the configuration information, where the configuration information may be used to determine the relay amplify-and-forward time set, or the relay device may determine the relay amplify-and-forward time set based on the configuration information.

The relay may determine, based on the configuration information, the duration of the relay amplify-and-forward time set. For example, the configuration information includes a periodicity for enabling and disabling amplification and forwarding by the relay, and the periodicity for enabling and disabling amplification and forwarding by the relay may be used to determine the duration of the relay amplify-and-forward time set. For a detailed description, refer to an example of (2) in "a. The first information indicates a duration of the relay amplify-and-forward time set, or a quantity of slots included in the relay amplify-and-forward time set" in "1. How the first information indicates the relay amplify-and-forward time set".

The relay amplify-and-forward time set further corresponds to start time of the relay amplify-and-forward time set, and the relay may determine the start time of the relay amplify-and-forward time set based on the configuration information. For example, the configuration information includes a time division duplex-uplink-downlink configuration periodicity, and the time division duplex-uplink-downlink configuration periodicity may be used to determine the start time of the relay amplify-and-forward time set. For a detailed description, refer to an example of (3) in "b. The relay device determines a start point or start time of the relay amplify-and-forward time set" in "1. How the first information indicates the relay amplify-and-forward time set". For another example, the configuration information includes a subcarrier spacing or a carrier frequency range, and the subcarrier spacing and/or the carrier frequency range may be used to determine the start time of the relay amplify-and-forward time set. For a detailed description, refer to examples of (5) and (6) in "b. The relay device determines a start point or start time of the relay amplify-and-forward time set" in "1. How the first information indicates the relay amplify-and-forward time set".

Optionally, the start time of the relay amplify-and-forward time set may be correspondingly a first configurable forwarding time in the relay amplify-and-forward time set. To be specific, in the relay amplify-and-forward time set, a plurality of forwarding times may be configured, and a minimum value of the configurable forwarding times is correspondingly the start time.

c. The first information includes the downlink control information, where the downlink control information indicates at least one of the following information: the first beam, the forwarding time, the amplification gain, and the on-off control.

The relay amplify-and-forward time set further corresponds to start time of the relay amplify-and-forward time set. The relay device may determine the start time based on time at which the downlink control information is received and effective time, where the effective time is a time interval between the time at which the relay device receives the downlink control information and the start time.

This application provides the following several examples of how to determine the effective time.

Example 1: The effective time is determined based on capability information of the relay. For example, the relay device determines the effective time based on the capability information of the relay device. For another example, the relay device sends the capability information of the relay device to the network device, the network device determines the effective time based on the capability information of the relay device, and the network device sends the effective time to the relay device. Correspondingly, the relay device receives the effective time from the network device. For a detailed description, refer to an example of (1) in "a. The relay device determines a start point or start time of the relay amplify-and-forward time set" in "1. How the first information indicates the relay amplify-and-forward time set".

Example 2: The effective time is determined based on the capability information of the relay and second information, where the second information includes at least one of the following: a subcarrier spacing and a carrier frequency range. The subcarrier spacing may be configured by the network device, and the carrier frequency range may be implicitly determined by the relay device based on information configured by the network device. For example, the relay device determines the effective time based on the capability information of the relay and the second information. For another example, the relay device sends the capability information of the relay device to the network device, the network device determines the effective time based on the capability information of the relay device and the second information, and the network device sends the effective time to the relay device. Correspondingly, the relay device receives the effective time from the network device. For a detailed description, refer to an example of (4) in "a. The relay device determines a start point or start time of the relay amplify-and-forward time set" in "1. How the first information indicates the relay amplify-and-forward time set".

Optionally, the radio resource control message is used to determine the configuration information of the relay amplify-and-forward time set, and the configuration information of the relay amplify-and-forward time set includes the second information.

Second aspect: The first information further includes indication information, the indication information indicates that the configuration information of the amplify-and-forward time set takes effect periodically, and a time interval for the configuration information of the amplify-and-forward time set to take effect is the duration. After receiving the indication information, the relay device periodically forwards a signal based on the first information.

For details, refer to an example of (4) in "a. The first information indicates a duration of the relay amplify-and-forward time set, or a quantity of slots included in the relay amplify-and-forward time set" in "1. How the first information indicates the relay amplify-and-forward time set".

Third aspect: Size of the first information

In a case that the first information includes the downlink control information and the radio resource control message, the relay device determines a size of the downlink control information based on the duration and at least one of the second field and the third field.

For details, refer to an example in "8. How to determine a size of the first information (for example, DCI)".

Fourth aspect: How the first information jointly indicates at least two of the following information: the first beam, the forwarding time, the amplification gain, and the on-off control.

For example, the first information indicates to forward the first signal based on the first beam within the forwarding time. For details, refer to the following descriptions corresponding to a and b in "2. How the first information indicates a beam".

For example, the first information indicates to forward the first signal based on the amplification gain within the forwarding time. For details, refer to the following descriptions corresponding to a and b in "3. How the first information indicates an amplification gain".

For example, the first information indicates to forward the first signal based on the first beam and the amplification gain. For details, refer to the following description corresponding to a in "6. How the first information jointly indicates at least two of the foregoing information 1 to 5".

For example, the first information indicates to forward the first signal in a time unit in which the on-off control indicates to enable the amplify-and-forward function and that is in the forwarding time. For details, refer to the following description corresponding to a in "4. How the first information indicates on-off control".

For example, the first information indicates to forward the first signal based on the first beam in a time unit in which the on-off control indicates to enable an amplification function. For details, refer to the following description corresponding to "In an implementation" in Example 1 of (1) in "b. The first information further explicitly indicates the related information of the forwarding time" in "2. How the first information indicates a beam".

For example, the first information indicates to forward the first signal based on the amplification gain in a time unit in which the on-off control indicates to enable the amplification function. For details, refer to the following description corresponding to "In an implementation" in Example 1 of (1) in "b. The first information further explicitly indicates the related information of the forwarding time" in "3. How the first information indicates an amplification gain".

For example, the first information indicates to forward the first signal based on the first beam and the amplification gain within the forwarding time. For example, the first information indicates to forward the first signal based on the amplification gain and the first beam in a time unit in which the on-off control indicates to enable the amplification function. For example, the first information indicates to forward the first signal based on the first beam in a time unit in which the on-off control indicates to enable the amplify-and-forward function and that is in the first forwarding time. For example, the first information indicates to forward the first signal based on the amplification gain in a time unit in which the on-off control indicates to enable the amplify-and-forward function and that is in the first forwarding time. For example, the first information indicates to forward the first signal based on the first beam and the amplification gain in a time unit in which the on-off control indicates to enable the amplify-and-forward function and that is in the first forwarding time. For details of the foregoing five examples, refer to the following descriptions corresponding to b, d, e, f, and c in "6. How the first information jointly indicates at least two of the foregoing information 1 to 5".

For ease of understanding of an implementation of configuring or indicating a beam by using the first information in embodiments of this application, the following describes a process that is between a base station and a network and in which a beam index corresponds to an actual antenna.

1. The base station and the relay know information about a beam on the relay side in advance. The information may be preconfigured, or reported by the relay.

(a) The preconfigured information or the reported information may include a beam index and a coverage region corresponding to the beam index.

2. The base station indicates the beam index of the relay. The base station may first determine a coverage region that needs to be improved with the help of the relay, and then find the corresponding beam index based on a correspondence. The base station indicates the index. An advantage of this manner is that indication overheads are reduced (compared with direct configuration of a weight of the relay).

3. The relay finds a corresponding weight based on the beam index. In this case, a beam can be emitted in the corresponding coverage region.

For example, the beam index only refers to a beam corresponding to an antenna on a relay access side (a side facing the UE), and a correspondence agreed upon by both parties may be shown in Table 1. A beam index and a weight coefficient of an antenna element may be finally determined based on a multi-level correspondence. It is explained in a subsequent embodiment that a two-level index relationship between RRC and DCI corresponds to an index of an actual beam. In Table 1, not all information is required. Only one column or a plurality of columns may be stored.

**Table 1**

| Beam index | Weighting coefficient of an antenna element | Coverage region |
|---|---|---|
| C0 | F0 | A0 |
| C1 | F1 | A1 |
| ... | ... | |

In Table 2, an example in which a beam index corresponds to beams corresponding to antennas on both a relay backhaul side (facing the base station or an upper-level relay) and a relay access side (facing the UE or a lower-level relay) is used. A beam index and a weighting coefficient of an antenna element may be finally determined based on a multi-level correspondence.

**Table 2**

| Beam index | Weighting coefficient of an antenna element (backhaul side) | Weighting coefficient of an antenna element (access side) | Coverage region (access side) |
|---|---|---|---|
| C0 | G0 | F0 | A0 |
| C1 | G1 | F1 | A1 |
| ... | ... | ... | |

Note: The concepts of the beam, the weight coefficient of an antenna element, and the weight are equivalent, which are correspondingly specified as spatial filter (spatial filter) in protocols. For example, a transmit beam is a spatial domain transmission filter (spatial domain transmission filter), and a receive beam is a spatial domain receiver filter (spatial domain receiver filter).

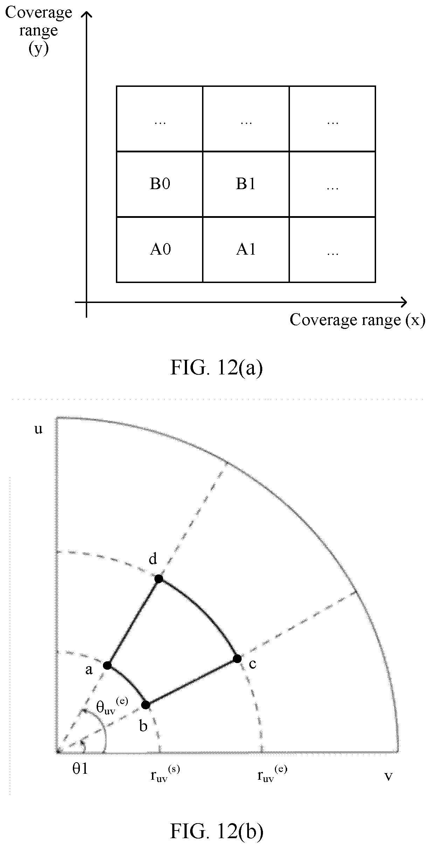

The following briefly describes a beam coverage range with reference to FIG. 12. FIG. 12 is a diagram of a two-dimensional coverage range of a beam or a beam set according to an embodiment of this application. (a) in FIG. 12 is a diagram in which a coverage region is square, that is, a coverage region of a beam or a beam set is two-dimensional. A block in (a) in FIG. 12 represents a coverage range of a beam set or a beam. (a) in FIG. 12 shows only coverage ranges of adjacent beams, and coverage ranges of beam sets or beams may overlap. A coverage range of an access-side beam of the relay device may approximately correspond to a region that is defined by both a horizontal (horizontal) direction and a vertical (vertical) direction in array antenna shaping. For example, an x-axis corresponds to the horizontal direction, and a y-axis corresponds to the vertical direction. A coverage range of a beam or a beam set may be defined as an angle width of 3 dB (where the angle width may alternatively be another value, for example, 5 dB or 6 dB), that is, an angle region in a direction with a difference of 3 dB from a gain of a strongest beam. (b) in FIG. 12 shows a corresponding coverage region in a polar coordinate region. Coverage region of a beam or a beam set are regions abcd, a radius start position is $r_{uv}^{(s)}$, a radius end position is $r_{uv}^{(e)}$, an angle start position is θ1, and an angle end position is $\theta_{uv}^{(e)}$.

To implement the relay control method 100 provided in this application, the following further describes a plurality of possible implementations from the following eight aspects:

    1. How the first information indicates forwarding time.
    2. How the first information indicates a beam.
    3. How the first information indicates an amplification gain.
    4. How the first information indicates on-off control.
    5. How the first information indicates a forwarding direction.
    6. How the first information jointly indicates at least two of the foregoing information 1 to 5.

7. How to determine that the first information is used to control the relay device.

8. How to determine a size of the first information (for example, DCI).

The following describes the foregoing several aspects in detail with reference to embodiments and accompanying drawings.

1. How the first information indicates the relay amplify-and-forward time set

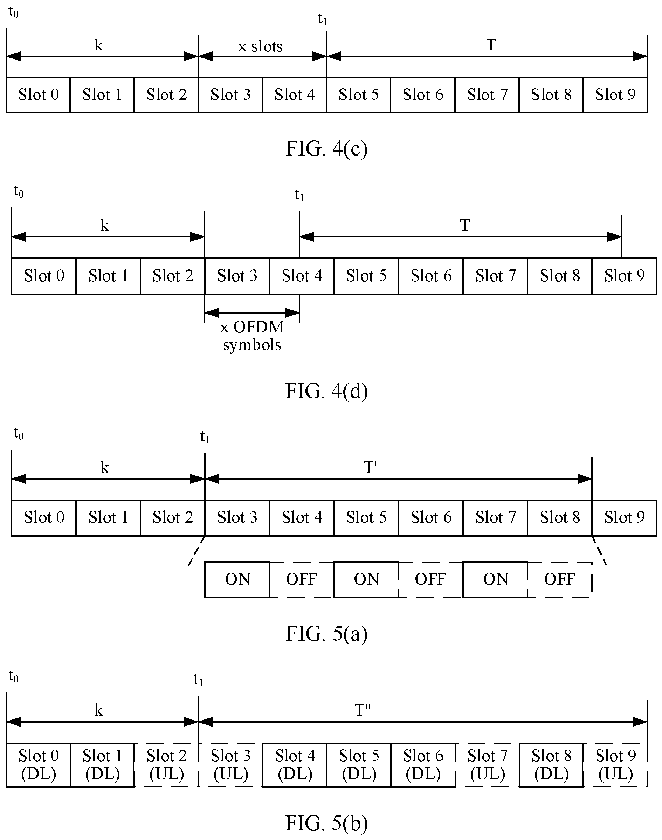

First, time related to the first information is described with reference to FIG. 4(a) to FIG. 4(d). $t_0$ is time at which the relay device receives the first information, $t_0$ is an $n^{th}$ time unit, and $t_1$ is the effective time of the first information, or the start time of the relay amplify-and-forward time set. An interval between $t_0$ and $t_1$ is greater than or equal to k time units. In other words, $t_1$ may be an $(n+k)^{th}$ slot/OFDM symbol, or the relay amplify-and-forward time set may take effect starting from one or more slots after the $(n+k)^{th}$ slot/OFDM symbol. A duration of the relay amplify-and-forward time set is T time units, where both k and T are positive integers. As shown FIG. 4(a), $t_0$ is a slot 0, k=3, and $t_1$ is a slot 3. As shown in FIG. 4(b), $t_0$ is an $n^{th}$ OFDM symbol, an interval between $t_0$ and $t_1$ is k OFDM symbols, and $t_1$ is an $(n+k)^{th}$ OFDM symbol. As shown in FIG. 4(c), $t_0$ is a slot 0, k=3, $t_1$ is a slot 5, an $(n+k)^{th}$ slot is a slot 3, $t_1$ is an $x^{th}$ slot after the slot 3, and x is a positive integer. For example, x=2, and $t_1$ is a slot 5. As shown in FIG. 4(d), $t_0$ is a slot 0, k=3, the $(n+k)^{th}$ slot is the slot 3, $t_1$ is an $x^{th}$ OFDM symbol after the slot 3, and x is a positive integer.

The manner of indicating the forwarding time may be understood as indicating the duration (for details, refer to the following descriptions of a) and the start point (for details, refer to the following descriptions of b) that are of the relay amplify-and-forward time set. The forwarding time is one or more time units in the relay amplify-and-forward time set.

It should be noted that in FIG. 4(a) to FIG. 4(d), an example in which the k time units are three slots and the T time units are five slots is used for illustration. However, this is not limited in this application. In addition, a quantity of slots in other accompanying drawings in this application is also an example, and this application is not limited thereto. In this embodiment of this application, an example in which one time unit is one slot is used for description.

a. The first information indicates a duration of the relay amplify-and-forward time set, or a quantity of slots included in the relay amplify-and-forward time set

For example, the first information is DCI. The DCI indicates T time units, that is, the relay amplify-and-forward time set. The relay forwards a signal in the T slots based on the DCI.

(1) For example, the relay determines a quantity T of time units based on configuration information (for example, RRC).

Example 1: The configuration information indicates the first field and the second field, and the relay terminal determines T based on the first field and the second field. The first field indicates the slot configuration list included in the relay amplify-and-forward time set, a length of the first field is K, the second field indicates the slot amplify-and-forward configuration, and a maximum value that is configured in the second field and that can be used is n0. $T = K/\lceil log_2 n0 \rceil$ (Formula 1), where $\lceil \cdot \rceil$ represents rounding up. For example, if the length of the first field is 10, and a length of configuration information of each slot is $\lceil log_2 n0 \rceil = 2$, $T = K/\lceil log_2 n0 \rceil = 5$, where there are a total of five slots from the slot 3 to the slot 7 in FIG. 4(a).

Example 2: The configuration information indicates the first field and the third field. The first field indicates the slot configuration list included in the relay amplify-and-forward time set. The third field indicates the forwarding beam configuration list. A maximum value of the third field is n1, where n1 indicates a maximum quantity of beams supported by the relay, or n1 indicates a quantity of beams (or a quantity of activated beams or a quantity of enabled beams) that can be used by the relay device in a configuration. The relay terminal determines T based on the first field and the third field. $T = K/\lceil log_2 n1 \rceil$ (Formula 2).

Example 3: The configuration information indicates the first field, the second field, and the third field. The first field indicates the slot configuration list included in the relay amplify-and-forward time set, the third field indicates the forwarding beam configuration list, and the second field indicates the slot amplify-and-forward configuration. A maximum value that is configured in the second field and that can be used is n0. A maximum value of the third field is n1, where n1 indicates a maximum quantity of beams supported by the relay, or n1 indicates a maximum quantity of beams that can be used by the relay during amplification and forwarding in a configuration. The relay terminal determines T based on the first field, the second field, and the third field. $T = K/(\lceil log_2 n0 \rceil + \lceil log_2 n1 \rceil)$ (Formula 3).

For example, the first field is slotRepeatingList, the second field is slotRepeatingIndication, and the third field is slotBeamList. Specific configurations are as follows. It should be noted that examples provided for fields (for example, the first field and the second field) in this application do not constitute a limitation on this application. These fields may alternatively be other fields having a similar function. These fields may be in same configuration information, or may be in different configuration information. This is not limited in this application.

```
            NetworkControlCombinations::=SEQUENCE {//relay control combination
                    subcarrierSpacing SubcarrierSpacing,
    //subcarrier spacing OPTIONAL, //optional parameter
                    controlledRepeating SEQUENCE (SIZE (1..maxNrof ControlledRepeatingPerSet)) OF
                    repeatingComb//slot amplify-and-forward
    configuration set OPTIONAL, //optional parameter
                    positionInDCI//position in DCI
    INTEGER (0..maxRepeater-DCI-PayloadSize-1)//control a
                    maximum load of the DCI of the
    relay, for example, 128 bits OPTIONAL, //optional parameter
                    ...,
            }
            repeatingComb::=SEQUENCE {//amplify-and-forward configuration combination
                    repeatingCombId RepeatingCombId, //index of the amplify-and-forward configuration
                    combination
                    slotRepeatingList//slot amplify-and-forward configuration list SEQUENCE (SIZE
                    (1..maxNrofSlotRepeating)) OF slotRepeating OPTIONAL, //optional parameter
                    repeatingPeriod INTEGER (0..A-1)/time
    periodicity information. OPTIONAL, //optional
                    parameter
            slotRepeating::=SEQUENCE {//slot amplify-and-forward configuration parameter
                    slotRepeatingIndication INTEGER (0..n0-1)
    //slot amplify-and-forward configuration indication
                    (or referred to as a slot forwarding
    configuration index) OPTIONAL, //optional parameter
                    slotOffset INTEGER (0..A-1)//indicates a
    slot for the configuration. OPTIONAL, //optional
                    parameter
                    slotBeamList//candidate beam set (note: a
    beam is further specified by DCI if a quantity of beams
                    in the set is greater than 1) SEQUENCE
    (SIZE (1..maxNrofSlotBeams)) OF INTEGER (0..n1-1) OPTIONAL,
                    //optional parameter
                    ..., }
```

maxNrofControlledRepeatingPerSet is a maximum quantity of network control relay forwarding configuration sets.

repeatingComb indicates the amplify-and-forward configuration combination, including the index repeating-CombId and the slot amplify-and-forward configuration list slotRepeatingList, where slotRepeatingList can be used to configure amplify-and-forward configurations for a plurality of slots. maxNrofSlotRepeating is a maximum quantity of configurable slots in a configuration set (actually, a quantity of time units included in the relay amplify-and-forward time set may be less than the maximum quantity, that is, T≤the maximum quantity of configurable slots). repeatingPeriod indicates the time periodicity information corresponding to the amplify-and-forward configuration combination. For example, the time periodicity information may be used to determine the duration of the relay amplify-and-forward time set, or a length (or a width) of a relay amplify-and-forward time window. Further, the time periodicity information may be further used to determine the start time of the relay amplify-and-forward time set (or time window).

slotRepeating indicates a forwarding manner configuration parameter. slotRepeatingIndication indicates the slot amplify-and-forward configuration indication. n0 indicates a maximum value that can be used for each slotRepeating configuration (the maximum quantity that can be configured). Optionally, slotRepeatingIndication is used to determine at least one of the following: an amplification and forwarding manner of the slot and an amplification gain (or amplify-and-forward power) corresponding to the slot.

slotBeamList represents a forwarding beam configuration, or a set of candidate beams in the slot. maxNrof-SlotBeams is a quantity of beams that can be configured in a slot. n1 represents a maximum value that can be used for each slotBeamList configuration. For example, n1 herein may be a maximum quantity of beams supported by the relay. Alternatively, n1 herein is a maximum quantity of beams that can be used by the relay during amplification and forwarding in a configuration. For example, when a value of a field in the configuration information is 0, the maximum quantity of beams that can be used during amplification and forwarding is 3, that is, n1=3. When the value of the field is 2, the maximum quantity of beams that can be used during amplification and forwarding is 1, that is, n1=1. Assuming that the field maxNrofSlotBeams is 1, or assuming that only one beam is configured in the slotBeamList, Formula 3 may be used.

Further, if part of the configuration information may be used for all forwarding times in the relay amplify-and-forward time set (alternatively, all forwarding times in the relay amplify-and-forward time set correspond to same configuration information), the configuration information may be advanced. For example, in the relay amplify-and-forward time set, candidate beam sets slotBeamList of all forwarding times are the same, that is, candidate beams corresponding to all forwarding times come from a same set.

```
NetworkControlCombinations::=SEQUENCE {//relay control
 combination
                 subcarrierSpacing SubcarrierSpacing,
 //subcarrier spacing OPTIONAL, //optional parameter
                 controlledRepeating SEQUENCE (SIZE (1..maxNrof ControlledRepeatingPerSet)) OF
                 repeatingComb//slot amplify-and-forward
 configuration set OPTIONAL, //optional parameter
                 positionInDCI//position in DCI INTEGER
 (0..maxRepeater-DCI-PayloadSize-1)//control a
                 maximum load of the DCI of the relay,
 for example, 128 bits OPTIONAL, //optional parameter
                 slotBeamList//candidate beam set (note:
 a beam is further specified by DCI if a quantity of beams
                 in the set is greater than 1) SEQUENCE
 (SIZE (1..maxNrofSlotBeams)) OF INTEGER (0..n1-1) OPTIONAL,
                 //optional parameter
                 ...,
        }
        repeatingComb::=SEQUENCE {//amplify-and-forward configuration combination
                 repeatingCombId RepeatingCombId, //index of the amplify-and-forward configuration
                 combination
                 slotRepeatingList//slot amplify-and-forward configuration list SEQUENCE (SIZE
                 (1..maxNrofSlotRepeating)) OF slotRepeating OPTIONAL, //optional parameter
                 repeatingPeriod INTEGER (0..A-1)//time
 periodicity information. OPTIONAL, //optional
                 parameter
        slotRepeating::=SEQUENCE {//slot amplify-and-forward configuration parameter
                 slotRepeatingIndication INTEGER
 (0..n0-1)//slot amplify-and-forward configuration indication
                 (or referred to as a slot forwarding
 configuration index) OPTIONAL, //optional parameter
                 slotOffset INTEGER (0..A-1)//indicates
 a slot for the configuration. OPTIONAL, //optional
                 parameter
                 ...,
        }
```

Optionally, using $n0 = 4$ as an example, a value indicated by the field slotRepeatingIndication and corresponding indication information may be shown in Table 3.

Optionally, using $n0 = 4$ as an example, a value indicated by the field slotRepeatingIndication and corresponding indication information may be shown in Table 4.

**Table 3**

| Value (value) | Indication information (indication) |
|---|---|
| 0 | Not used for amplification and forwarding |
| 1 | Only one beam is used for amplification and forwarding |
| 2 | Two beams are used for amplification and forwarding (optionally, two beams are separately used for different OFDM symbols in one slot) |
| 3 | Reserved |

**Table 4**

| Value (value) | Indication information (indication) |
|---|---|
| 0 | Amplification gain G0 |
| 1 | Amplification gain G1 |
| 2 | Amplification gain G2 |

(continued)

| Value (value) | Indication information (indication) |
|---|---|
| 3 | Reserved |

G0, G1, and G2 are integers.

Optionally, using $n0 = 4$ as an example, a value indicated by the field slotRepeatingIndication and corresponding indication information may be shown in Table 5.

**Table 5**

| Value (value) | Indication information (indication) |
|---|---|
| 0 | Forwarding power P0 |
| 1 | Forwarding power P1 |
| 2 | Forwarding power P2 |
| 3 | Reserved |

P0, P1, and P2 are integers. Optionally, the forwarding power herein is a corresponding power on a single resource element (energy per resource element, EPRE).

Optionally, configuration information of the field slotRepeatingIndication is used only in the following scenario: The relay is indicated, based on DCI, to perform amplification and forwarding.

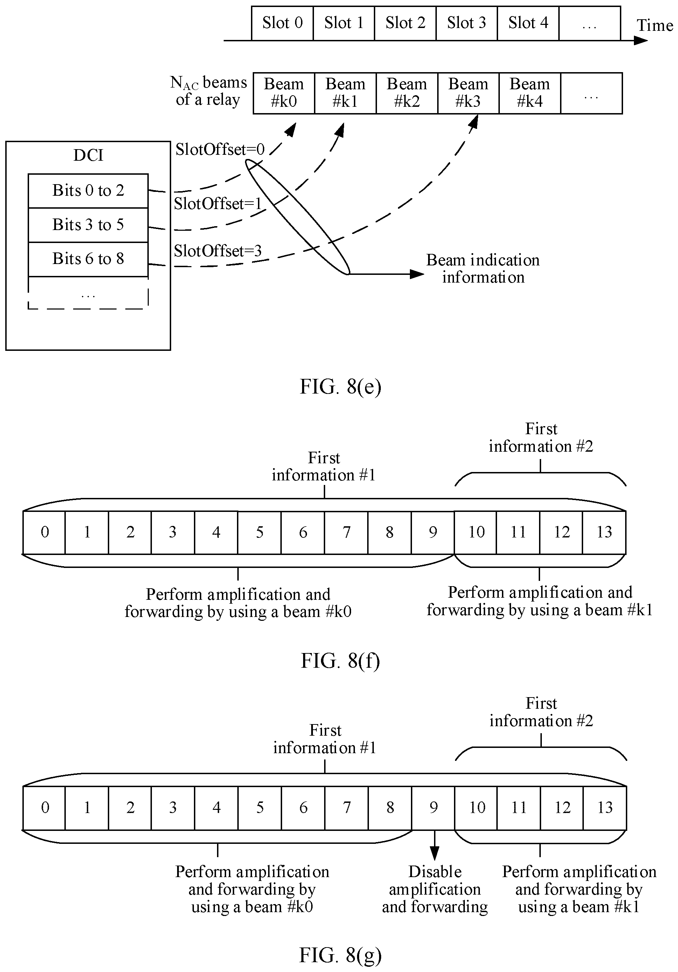

For example, as described above, a size of the DCI may be determined based on T indicated by the configuration information, and a quantity of time units included in time actually used for amplification and forwarding may be less than or equal to T. In this application, the time actually used for amplification and forwarding is referred to as an actual relay amplify-and-forward time set. For example, the configuration information includes a fourth field, and the fourth field indicates the actual relay amplify-and-forward time set. For example, the fourth field is slotOffset, T=5, the relay amplify-and-forward time set is a slot 0 to a slot 4 shown in FIG. 8(e), and values of slotOffset are 0, 1, and 3 respectively. slotOffset=0 indicates the slot 0, slotOffset=1 indicates the slot 1, and slotOffset=3 indicates the slot 3. Therefore, the actual relay amplify-and-forward time set is the slot 0, the slot 1, and the slot 3 shown in FIG. 8(e). To be specific, in FIG. 8(e), the size of the DCI is 9 bits. For a manner of determining the size of the DCI, refer to Formula 4, Formula 5, or Formula 6.

(2) A value of T may be determined based on on-off information of the relay.

To be specific, if a periodicity for enabling and disabling the amplify-and-forward function of the relay is T', it may be determined that the duration of T is a quantity of slots for enabling amplification and forwarding in the time periodicity T'. Amplification and forwarding in T slots may be separately configured by using configuration information. For example, the configuration information may be repeatingComb, and repeatingComb includes T slotRepeating fields. In this case, it can be determined that a quantity of fields is T. For another example, as shown in FIG. 5(a), the configuration information indicates a case in which the amplify-and-forward function is enabled or disabled in the slots within T'. ON indicates that the amplify-and-forward function is enabled in the slot, and OFF indicates that the amplify-and-forward function is disabled in the slot. T'=6 and T=3, that is, T is three slots in which amplification and forwarding are enabled (ON) in T'. T' may be indicated by the network device, or may be preconfigured in the relay.

(3) A value of T may be determined based on a time division duplex-uplink-downlink configuration (time division duplex-uplink-downlink configuration, TDD-UL-DL-Config) of the relay.

In other words, the value of T is a duration of a slot periodicity corresponding to TDD-UL-DL-Config.

Example 1: Corresponding to the scenario shown in FIG. 3(a), T may be used for the relay to forward an uplink signal and a downlink signal.

Example 2: Corresponding to the scenario shown in FIG. 3(b), the value of T is a duration of an uplink slot in the slot periodicity corresponding to TDD-UL-DL-Config. In this case, control information is only used to control uplink amplification and forwarding performed by the relay.

Example 3: Corresponding to the scenario shown in FIG. 3(c), the value of T is a duration of a downlink slot in the slot periodicity corresponding to TDD-UL-DL-Config. In this case, control information is only used to control downlink amplification and forwarding performed by the relay. For example, as shown in FIG. 5(b), a downlink slot is identified by downlink (downlink, DL), an uplink slot is identified by uplink (uplink, UL), T" is the duration of the downlink slot in the slot periodicity corresponding to TDD-UL-DL-Config, T"=7, and T=4, that is, four downlink slots in the TDD-UL-DL-Config periodicity.

Optionally, in Example 2 and Example 3, the first information further includes indication information indicating a forwarding direction. In Example 2, the indication information indicates uplink. In Example 3, the indication information indicates downlink.

The T slots may be consecutive or inconsecutive. For example, in the T slots, every two adjacent slots are equally spaced, for example, FIG. 5(a); and for another example, every two adjacent slots are not equally spaced, for example, FIG. 5(b).

(4) The first information takes effect periodically, that is, after the relay receives the first information, the first information takes effect periodically and repeatedly subsequently.

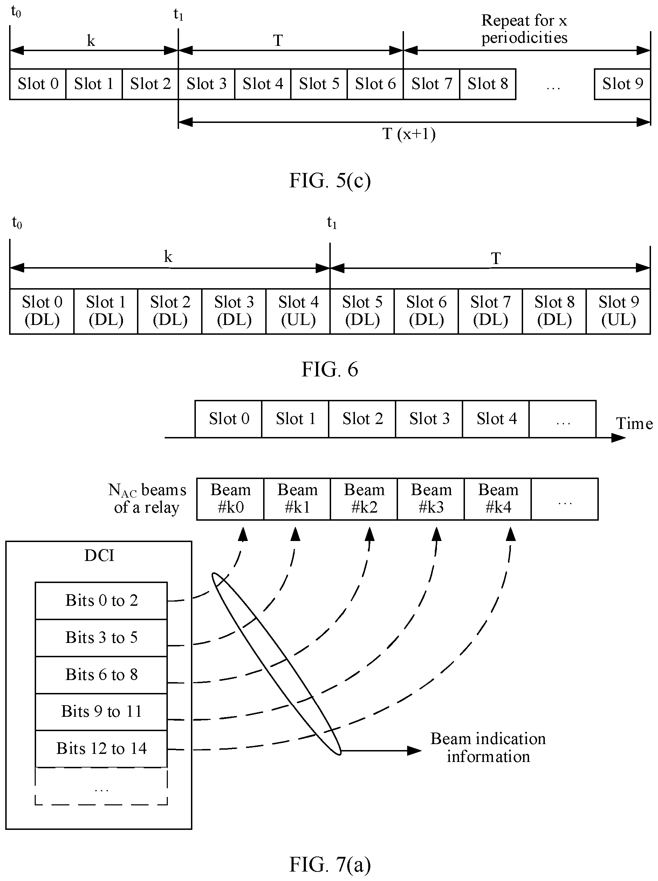

As shown in FIG. 5(c), x is a quantity of periodicities in which the first information repeatedly takes effect. After the first information starts to take effect from $t_1$, the first information continuously takes effect for x+1 periodicities, and a total effective duration is T(x+1) slots. In other words, the total effective duration may be understood as that, within the total duration, the relay forwards the signal based on the first information; and beyond this time period, the relay may not forward the signal based on the first information.

For example, the quantity of effective periodicities (or the total effective duration) may be determined based on a timer (timer). Start time of the timer may be determined based on receiving time or effective time of the first information. For another example, preset duration of the timer may be determined based on configuration information. In other words, the quantity of effective periodicities (or the total effective duration) may be determined based on the configuration information. For example, the quantity of effective periodicities or the preset duration may be directly indicated by the configuration information.

For another example, the quantity of effective periodicities may be indicated by the network device. For example, the first information further includes indication information, and the indication information indicates the quantity of effective periodicities.

b. The relay device determines a start point or start time of the relay amplify-and-forward time set.

The start point or the start time may also be referred to as effective time in this application, or an interval (for example, k slots in FIG. 4(a) to FIG. 4(d)) between time at which the DCI is received and the start time of the relay amplify-and-forward time set.

(1) Determine k based on a relay capability

For example, the relay capability in this application may include a downlink data processing capability category and a downlink control information processing capability, which are uniformly described herein.

For example, a relay with a strong capability may use a small value of k, that is, effective time is closer to the time in which the DCI is received. For example, in Table 6 and Table 7, a correspondence between the relay capability and k is shown.

Example 1: The relay device determines k based on a capability of the relay device.

Example 2: The relay capability may be reported by the relay to the base station, and the base station determines, based on the relay capability, time or k for controlling the DCI for the relay to take effect, to perform scheduling. For example, the base station determines k based on the relay capability, and sends indication information to the relay device, where the indication information indicates a value of k. Correspondingly, the relay device determines the value of k based on the indication information. For example, the first information may include the indication information.

An advantage of Example 2 is that the effective time is determined by the base station, thereby reducing a case in which the relay cannot assist in signal transmission between the base station and the terminal because scheduling of the base station mismatches forwarding time.

(2) Determine k based on a service requirement when the relay assists in communication between the network device and the UE

For example, a small value of k may be used to adapt to a burst or delay-sensitive service. For another example, a large value of k may be used to adapt to a delay-insensitive service. For example, in Table 6 and Table 7, a correspondence between a relay capability and k is shown.

(3) Determine k based on configuration information

For example, the effective time is related to a time division duplex-uplink-downlink configuration periodicity (TDD-UL-DL-Config). Specifically, the effective time may be a closest start slot that is for receiving the first information and that is of a next time division duplex-uplink-downlink configuration periodicity. For example, as shown in FIG. 6, a slot 4 and a slot 9 are uplink slots, and the remaining slots are downlink slots. For example, the first information is DCI, and a slot 5 is a closest start slot that is for receiving the DCI and that is of a next time division duplex-uplink-downlink configuration periodicity.

(4) Determine k based on $k_{ref}$

Example 1: A value of $k_{ref}$ corresponds to the relay capability. For example, $k_{ref}$ is a minimum value of k. To be specific, the relay needs to make a function corresponding to the configuration/indication information take effect at time corresponding to $k_{ref}$ Relays with a plurality of capabilities may respectively correspond to a plurality of corresponding minimum values $k_{ref}$ of k. For example, a correspondence between a relay type and a value of $k_{ref}$ may be shown in Table 6, where k0, k1, and so on are integers.

**Table 6**

| Relay type (or relay capability) | $k_{ref}$ |
|---|---|
| NCR-0 | k0 |
| NCR-1 | k1 |
| ... | ... |

$k_{ref}$ may be reported by the relay to the base station, or may be preset. For example, $k_{ref}$ is a minimum value of k required by the relay to receive the DCI and execute instructions in the DCI, that is, effective time $k \geq k_{ref}$

Example 2: A value of $k_{ref}$ corresponds to the relay capability and the subcarrier spacing. For example, the correspondence may be shown in Table 7. A relay type in Table 7 may alternatively be a relay capability, a subcarrier spacing index $\mu$ may alternatively be a carrier spacing SCS, and a correspondence between the subcarrier spacing index and the subcarrier spacing (subcarrier spacing, SCS) may be $SCS = 15 \times 2^{\mu}$, where $\mu$ =0, 1, 2, and so on. k'0, k'1, and so on and 10, 11, and so on are integers. The subcarrier spacing may be determined based on a physical downlink control channel (physical downlink control channel, PDCCH) corresponding to the DCI. For example, for a downlink slot or an OFDM symbol, the subcarrier spacing herein may be understood as being directly determined based on a subcarrier spacing of (the PDCCH corresponding to) the DCI. For an uplink slot or an OFDM symbol, the subcarrier spacing herein may be understood as being directly determined based on a subcarrier spacing of (the PDCCH corresponding to) the DCI and/or a subcarrier spacing of uplink forwarded data.

**Table 7**

| Relay type / Subcarrier spacing index μ | $k_{ref}$ | | |
|---|---|---|---|
| | NCR-0 | NCR-1 | ... |
| 0 | k'0 | 10 | ... |
| 1 | k'1 | 11 | ... |

| Relay type / Subcarrier spacing index μ | $k_{ref}$ | | |
|---|---|---|---|
| | NCR-0 | NCR-1 | ... |
| 2 | k'2 | 12 | ... |
| 3 | k'3 | 13 | ... |
| 4 | k'4 | 14 | ... |
| 5 | k'5 | 15 | ... |
| … | … | … | … |

Example 3: A value of $k_{ref}$ is related to a carrier frequency range (frequency range, FR). For example, a correspondence may be shown in Table 8. K"0, k"1, k"2, and so on are integers.

**Table 8**

| FR | $k_{ref}$ |
|---|---|
| FR1 | k"0 |
| FR2-1 | k"1 |
| FR2-2 | k"2 |
| ... | ... |

(5) Determine k based on $k_{ref}$ and $k_{offset}$.

For example, $k = mk_{ref} + nk_{offset}$, where m and n are coefficients. Particularly, when n=0, refer to the foregoing (4); and when n=m=1, $k = k_{ref} + k_{offset}$.

For example, $k_{ref}$ may be determined in the manner in (4). $k_{offset}$ is determined based on configuration information of the base station or the indication information in the DCI, or $k_{offset}$ is a predefined value, or a value of $k_{offset}$ is related to a subcarrier spacing index $\mu$ (or subcarrier spacing SCS), or the value of $k_{offset}$ is related to a carrier frequency range.

For the manner of determining $k_{offset}$ based on the subcarrier spacing index $\mu$ (or subcarrier spacing SCS), refer to Example 2 in (4), and $k_{ref}$ is replaced with $k_{offset}$. Optionally, subcarrier spacing indexes used to determine $k_{offset}$ and $k_{ref}$ may be different. Similarly, for the manner of determining $k_{offset}$ based on the FR, refer to Example 3 in (4), and $k_{ref}$ is replaced with $k_{offset}$. Optionally, FRs used to determine $k_{offset}$ and $k_{ref}$ may be different.

(6) Determine k based on a subcarrier spacing

In an actual system, different subcarrier spacings may be used for a plurality of uplink slots and a plurality of downlink slots, and even different subcarrier spacings are used for different channels and different frequency bands at same time. Therefore, a manner of determining the effective time in (6) is accurate to a granularity of a time unit (that is, a duration of a slot or a duration of an OFDM symbol).

For example, a downlink slot or an OFDM symbol k is directly determined based on a subcarrier spacing of (a PDCCH corresponding to) DCI. For another example, an uplink slot or an OFDM symbol k is directly determined based on a subcarrier spacing of (a PDCCH corresponding to) DCI and/or a subcarrier spacing of uplink forwarded data. For example, the DCI herein may be DCI used to carry the indication information of the network device to the relay device.

For another example, a duration of a downlink slot or an OFDM symbol k is determined based on the indication information in the DCI. For example, the base station configures a plurality of reference values, and the DCI indicates one of the reference values. For another example, time for downlink and time for uplink are different. In this case, the time for uplink and the time for downlink may be respectively determined based on different subcarrier spacings.

(7) The network device sends indication information to the relay device, where the indication information directly indicates a value of k.

For example, the base station and the relay device may preconfigure a mapping relationship shown in Table 9. The base station indicates any item in the first column of Table 9 to the relay device, and the relay device determines a corresponding value of k. k1, k2, k3, and k4 are integers.

**Table 9**

| Indication information bit | k |
|---|---|
| 00 | k1 |
| 01 | k2 |
| 10 | k3 |
| 11 | k4 |

The following describes in detail a format and a signaling design of the first information, that is, the following two to seven items.

2. How the first information indicates a beam

The first information includes a beam index. After receiving the first information, the relay device determines, based on the beam index, a beam used to forward the signal.

For example, the beam index included in the first information may be indicated by using forwarding time as a granularity. For example, the first information may indicate the beam index for a slot granularity/OFDM symbol granularity by indicating related information of the forwarding time and the beam index. An example in which the forwarding time is a slot is used below for description. However, this is not limited in this application, and is uniformly described herein.

The following describes a case that in addition to the beam index included in the first information, the first information may further implicitly indicate or explicitly indicate the related information of the forwarding time.

a. The first information further implicitly indicates the related information of the forwarding time

For example, there is a correspondence between the beam index indicated by the first information and a slot index of the forwarding time.

The network device configures beams in T slots for the relay device, and the relay may use $N_{AC}$ beams. In this case, $T \times \left\lceil \log_2 N_{AC} \right\rceil$ bits may be used to respectively indicate the beams in the slots. $N_{AC}$ is a quantity of activated beams of the relay. For example, $N_{AC}$ =8, and the first information is DCI. An indication manner is shown in FIG. 7(a). The related information of the forwarding time may be implicitly determined. To be specific, a 1st field (bits 0 to 2) indicates a beam #k0 and corresponds to an $(n+k)^{th}$ slot, a 2nd field (bits 3 to 5) indicates a beam #k1 and corresponds to an $(n+k+1)^{th}$ slot, and so on. n is a DCI receiving slot, and for a manner of determining k, refer to the foregoing description.

Optionally, $N_{AC}$ may be determined based on a determined higher layer parameter (for example, RRC). For example, $N_{AC}$ is determined based on a fifth field. The fifth field indicates a beam set that may be indicated for use in the slot, and $N_{AC}$ may be a quantity of beams configured in the fifth field. In an example, the fifth field is slotBeamList, indicating a beam set that may be indicated for use in the slot, and $N_{AC}$ is a quantity of beams configured in the slotBeamList field. Specifically, a maximum quantity of beams that may be used by the relay in a slot is $N_{Beams}$ (for example, $N_{Beams}$ =maxNrofSlotBeams), and slotBeamList indicates a beam set $I = \{I_0, I_1, ... , I_{N_{AC}-1}\}$, where $I_n \in \{0,1, ... , N_{Beams} - 1\}$, n = 0,1, ... , $N_{AC}$ - 1.

Optionally, #k0 corresponds to a #k0$^{th}$ beam (or beam index) in the beam set $I$, #k1 corresponds to a #k1$^{th}$ beam (or beam index) in the set $I$, and so on.

In an example, $N_{Beams}$=16, $N_{AC}$ = 8, and $I$ = {0, 2, 4, 6, 8, 10, 12, 14}, indicating that the relay has a maximum of 16 beams, and eight beams that can be used in the slot are configured by a higher layer as 0, 2, 4, ..., and 14. #k0=2, indicating a beam 4; #k1=0, indicating a beam 0, and so on.

Optionally, after configuring $N_{AC}$ beams by using RRC, the network device may further refresh (or update) the $N_{AC}$ beams by using a MAC-CE. In other words, the new $N_{AC}$ beams are reactivated by using the MAC-CE. For example, the network device indicates a beam set $I = \{I_0, I_1, ... , I_{N_{AC}-1}\}$ in the slotBeamList configured at first time, and the network device refreshes the beam set to $I' = \{I'_0, I'_1, ... , I'_{N_{AC}-1}\}$ at second time by using the MAC-CE. For example, the network device may refresh one or more beams in the set. In this manner, overheads and costs for updating the configuration information can be reduced.

Optionally, in a slot, $N_{AC}$ = 1 beams are configured by using RRC. In this case, the relay fixedly uses the beam to perform amplification and forwarding in the slot. Further, if the beam is refreshed (or updated) by using the MAC-CE, amplification and forwarding may be performed based on a refreshed beam. In this case, the DCI is not needed for beam indication for the slot. In one practice, no field in the DCI indicates a beam in the slot. In another practice, a field corresponding to beam indication in the DCI indicates other information. In addition, the DCI may further indicate at least one of on-off information, power information, forwarding direction information, and the like of the slot.

Optionally, $N_{AC} < 2^m$, where m is an integer. In this case, a beam index in the DCI indicates that only $N_{AC}$ values are required, and one or more remaining indexes may indicate other information. For example, one of the one or more indexes indicates the relay to disable amplification and forwarding. For example, values 0, 1, ..., $N_{AC}$ - 1 of fields indicate beam indexes, and the value $N_{AC}$ of the field indicates the relay to disable amplification and forwarding.

Optionally, in an actual case, considering that relay beam switching takes a time, the T slots may alternatively take effect at intervals. For example, the beam indexes correspond only to slots whose slot indexes are odd numbers after the slot n+k. For another example, the beam indexes correspond to only some OFDM symbols in slots after the slot n+k. For example, the some OFDM symbols may be first N OFDM symbols in the slots after the slot n+k, or last N OFDM symbols in the slots after the slot n+k. For example, N=13.

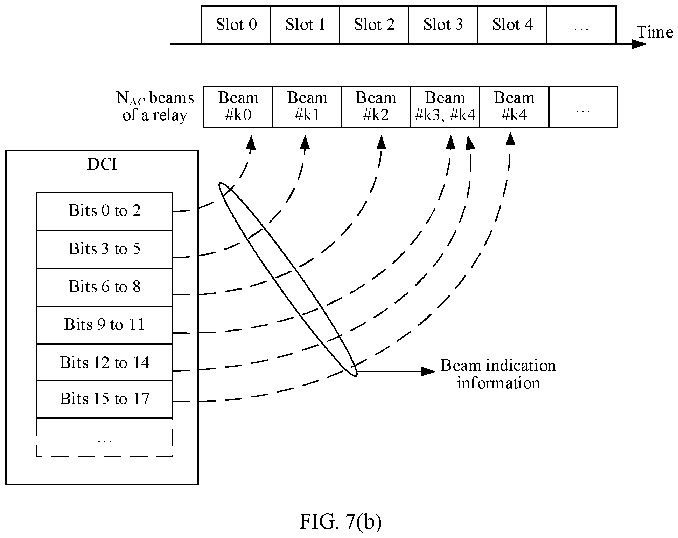

Optionally, there may be one or more slots in the T slots. In each of the one or more slots, the network device needs to indicate a plurality of beams. In this case, a plurality of fields are required to respectively indicate the plurality of beams in the slot. For example, $N_{AC}$=8 and the first information is DCI. The network device needs to indicate two beams in the slot 3, and an indication manner is shown in FIG. 7(b). A fourth field (bits 9 to 11) and a fifth field (bits 12 to 14) respectively indicate a beam #k3 and a beam #k4 corresponding to the slot 3. For example, whether a plurality of beams are indicated by using a plurality of fields in a slot may be determined based on the configuration information in a in "1. How the first information indicates forwarding time" described above.

b. The first information further explicitly indicates the related information of the forwarding time

The related information of the forwarding time may be specific time in which each beam acts in the T time units.

(1) The DCI explicitly indicates the related information of the forwarding time.

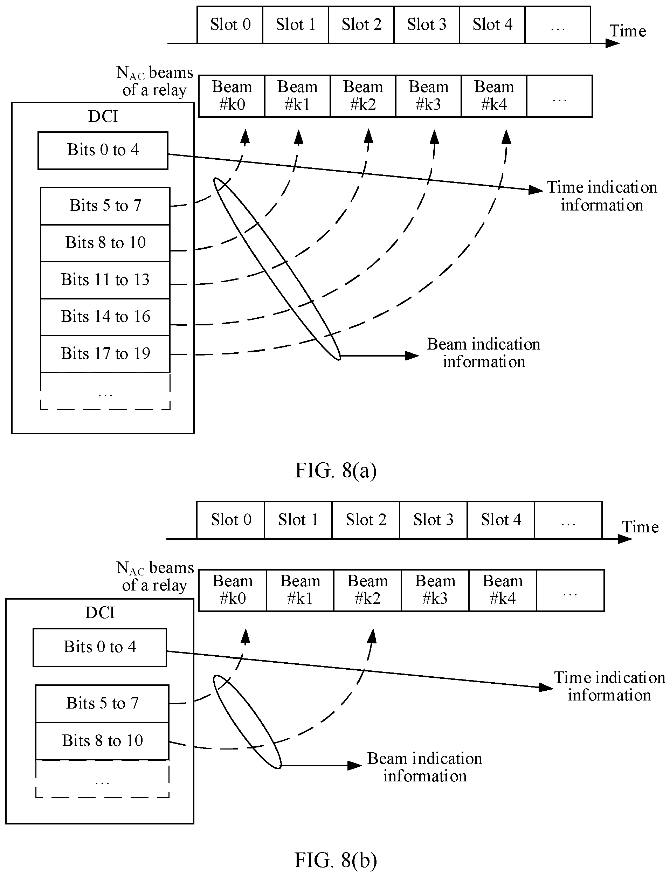

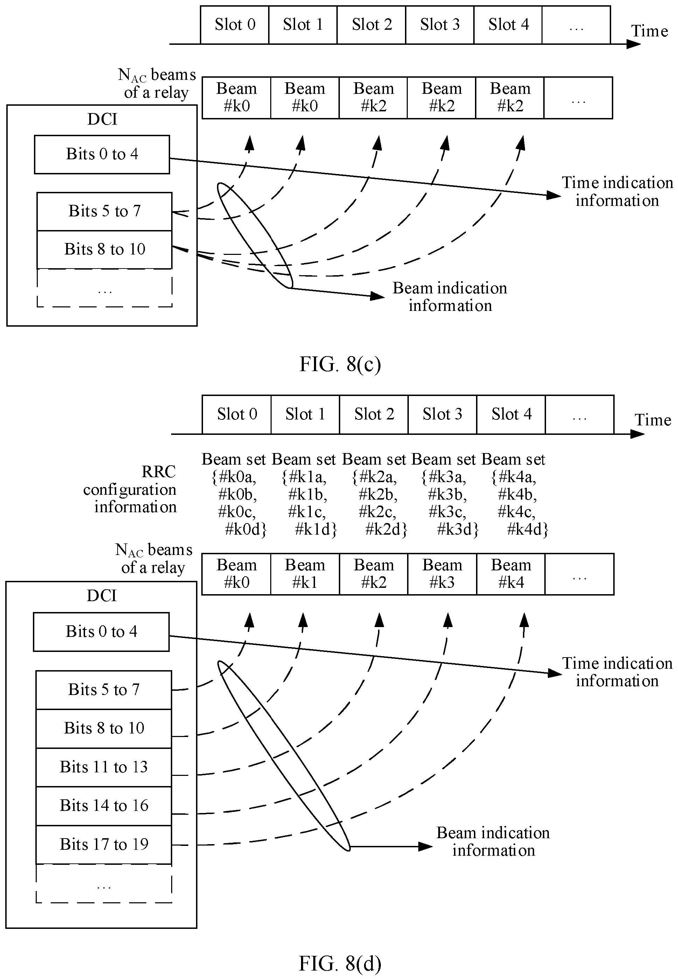

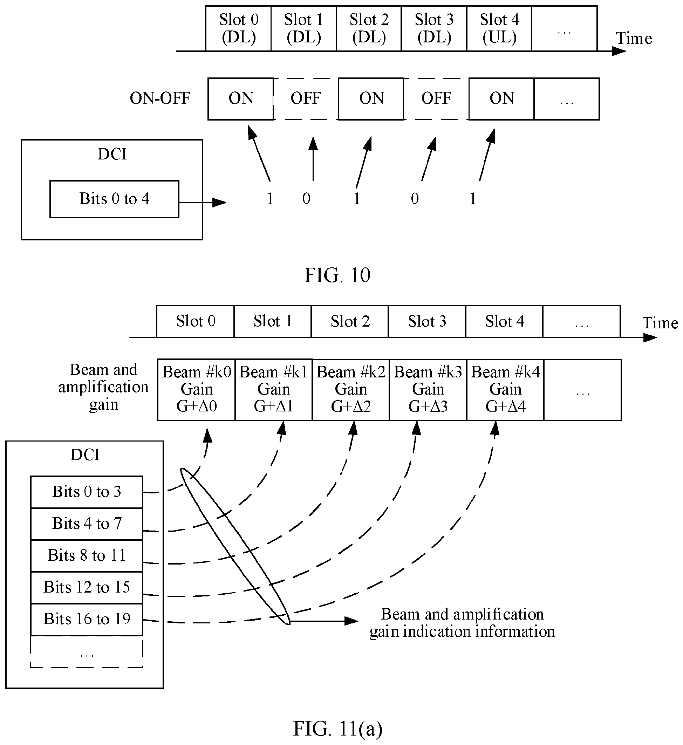

Example 1: The network device configures beams in T slots for the relay device, and the relay may use $N_{AC}$ beams. In this case, $T \times \lceil \log_2 N_{AC} \rceil$ bits may respectively indicate the beams in the slots. $N_{AC}$ is a quantity of activated beams of the relay. Bits 0 to T-1 in the DCI indicate the forwarding time, and every $\lceil \log_2 N_{AC} \rceil$ bits in a bit T to bits $T + T \times \lceil \log_2 N_{AC} \rceil - 1$ indicate beam indexes corresponding to a slot. For example, T=5, $N_{AC}$=8, and the first information is DCI. An indication manner is shown in FIG. 8(a). Bits 0 to 4 indicate the forwarding time. Using a bitmap form as an example, the forwarding time is 11111 starting from a kth slot, that is, a slot 0 to a slot 4 starting from the kth slot. Bits 5 to 7 indicate a beam #k0 and correspond to a slot 0, bits 8 to 10 indicate a beam #k1 and correspond to a slot 1, and so on.
In an implementation, in FIG. 8(a), if a bit in the bits 0 to 4 indicates that amplification and forwarding are disabled, beam information indicated by a field corresponding to the bit does not take effect, in other words, a beam indicated by the beam information indicated by the field corresponding to the bit is not used. For example, a beam corresponding to an ith bit in the bits 0 to 4 is indicated by bits 5+3i to 7+3i. If bit i=1 indicates that amplification and forwarding are correspondingly disabled, a beam indicated by the corresponding bits 8 to 10 does not take effect, and the relay does not forward the beam indicated by the bits 8 to 10 (or does not use the beam indicated by the bits 8 to 10) in the slot. It should be understood that, that a bit indicates to disable amplification and forwarding may be understood as that time indication information corresponding to the bit may indirectly indicate or implicitly indicate that amplification and forwarding are disabled by using the bit. For example, as shown in FIG. 10, a second bit and a fourth bit in bits 0 to 4 respectively indicate that amplification and forwarding are disabled in a slot 1 and a slot 3. For details, refer to descriptions corresponding to FIG. 10. This implementation may also be understood as that the first information jointly indicates a beam and on-off control.
Optionally, the relay may determine, based on priorities of time indication information and beam indication information, the forwarding time indicated by the DCI. For example, the priority of the beam indication information is higher than the priority of the time indication information. For details, refer to the foregoing example with reference to FIG. 10. For another example, the priority of the time indication information is higher than the priority of the beam indication information. FIG. 8(a) is used as an example. If the bits 0 to 4 indicate 11111, beams need to be forwarded in all the slots 0 to 4, but bits 11 to 13 do not indicate beams, and the first signal is not forwarded in the slot 2.
Example 2: The T=5 slots may alternatively be configured inconsecutively, that is, there is an interval between the plurality of slots included in the forwarding time. Specifically, as shown in FIG. 8(b), a field of time indication information of bits 0 to 4 is 10100, and the time indication information indicates a slot in which a beam takes effect. A 1st field (bits 5 to 7) indicates a beam #k0 and corresponds to a slot corresponding to the first 1 in 10 100. A 2nd field (bits 8 to 10) indicates a beam #k2 and corresponds to a slot corresponding to the second 1 in bits 10100.
Example 3: As shown in FIG. 8(c), a field of time indication information of bits 0 to 4 is 10 100, and the time indication information indicates a time period in which a beam takes effect. In other words, a 1st field (bits 5 to 7) indicates beams #k0 and corresponds to a time period between a slot corresponding to the first 1 and a next slot corresponding to the second 1 in 10100, that is, a slot 1 and a slot 2. A 2nd field (bits 8 to 10) indicates beams #k2, and corresponds to a slot 3, a slot 4, and a slot 5.
Example 4: A beam indicated by using the DCI is related to higher layer signaling. The higher layer signaling may be configured by using an RRC message, or may be activated by using a MAC-CE after being configured by using RRC. For example, FIG. 8(d) shows a pattern of a beam set configured by using RRC. A beam ki is from {kia, kib, kic, kid}, where i=0, 1, 3, 4; and ki, kia, kib, kic, and kid are beam indexes of the relay. To be specific, a difference between Example 4 and Example 1 herein lies in that in this example, a beam is indicated by a beam set. In another possible implementation, based on Example 4, the pattern of the beam set configured by using the RRC in Example 4 is replaced with a pattern without slots differentiated. In other words, the T slots use a common pattern.
For another example, the time information may further indicate an interval between adjacent beams, or a time period in which a corresponding beam takes effect. For example, if the beam indicated by using the DCI is located in a time period whose duration is $T$, a maximum of $\lceil log_2 T \rceil$ bits may be further used to indicate one time interval. If the time period indicates that there are n beams, a total of $n \times \lceil log_2 T \rceil$ bits may be used to indicate an interval between adjacent beams.
Further, if a plurality of beams in one (not necessarily all) slot need to be indicated, the corresponding slot includes two fields. Whether a plurality of fields (indicating a plurality of time periods) are included may be determined based on the configuration information in the foregoing embodiment.

(2) The configuration information (for example, RRC) indicates the related information of the forwarding time.

It may be understood that the fourth field in the configuration information replaces the time indication information in the DCI in the example in (1) to indicate an actual forwarding time, or the fourth field indicates relative time, that is, relative time in the relay amplify-and-forward time set (or relay amplify-and-forward time window).

For example, the fourth field is slotOffset, and values of slotOffset are 0, 1, and 3, respectively corresponding to a slot 0, a slot 1, and a slot 3. As shown in FIG. 8(e), bits 0 to 2 correspond to slotOffset=0, the bits 0 to 2 indicate a beam #k0, and the relay may determine, based on the DCI and the configuration information, to forward the beam #k0 in the slot 0. Similarly, the relay determines to forward the beam #k1 in the slot #1 and forward the beam #k3 in the slot 3. Optionally, the slot 0 is the start time of the relay amplify-and-forward time set.

It should be noted that a sequence of fields in the DCI in this application may be predefined. The figure is merely an example. This is not limited in this application. A quantity of fields in the DCI may be predefined, or may be determined by using the RRC configuration information. The figure is merely an example. For example, a quantity of fields in beam indication information in (b) and FIG. 8(c) is 2, but is not limited. This is uniformly described herein.

c. A beam corresponding to a slot in which no beam is configured and/or indicated may be a preset beam. In other words, if no beam is configured in a slot within the forwarding time, a relay forwarding beam corresponding to the slot is set as a beam.

For example, a slot in which no beam is configured may be understood as a slot in which no beam is configured by using RRC and a beam is indicated by using DCI. A slot in which no beam is indicated may be understood as a slot in which a beam is configured by using RRC and no beam is indicated by using DCI. Specifically, the slotBeamList field may not be configured for the slotRepeating field.

For example, a preset beam used for a relay forwarding beam in a slot is a relay forwarding beam corresponding to a synchronization/broadcast signal block, or a beam used by the relay to forward an SSB.

For example, a preset beam used for a relay forwarding beam in a slot is a relay forwarding beam corresponding to a channel state information reference signal (channel state information reference signal, CSI-RS), or a beam used by the relay to forward a CSI-RS.

For example, a preset beam used for a relay forwarding beam in a slot is a relay forwarding beam corresponding to a physical random access (physical random access channel, PRACH) signal, or a beam used by the relay to forward a PRACH.

For example, a preset beam used for a relay forwarding beam in a slot is a relay forwarding beam corresponding to a sounding reference signal (sounding reference signal, SRS), or a beam used by the relay to forward a beam SRS.

For example, a preset beam used for a downlink relay forwarding beam may be different from a preset beam used for an uplink relay forwarding beam.

It should be understood that selecting a beam for a slot in which no beam is configured can reduce a waste of resources, and determining, in the preset manner, a beam corresponding to the slot in which no beam is configured helps reduce signaling overheads, reduce detection performed by the relay on control signaling, and reduce implementation and operation costs of the relay.

d. For a slot in which no beam is configured and/or indicated, amplification and forwarding are disabled by default, in other words, the relay does not forward a signal in the slot.

For example, this implementation takes effect when the following case is true: At least two candidate beams are configured for the relay in the slot, but DCI does not indicate beam information of the slot.

For example, this implementation takes effect when the following case is true: Only one candidate beam is configured for the relay, and DCI does not indicate power information of the slot.

For example, this implementation takes effect when the following case is true: Only one candidate beam is configured for the relay, and DCI does not indicate uplink/downlink information of the slot or the DCI does not indicate that the slot is used for uplink/downlink transmission.

In another implementation, whether an amplify-and-forward function of a slot in which no beam is configured is enabled is determined based on indication information sent by the network device, or is determined based on preconfigured information. For example, when the indication/configuration information is 1, the relay enables amplification and forwarding by default; or when the indication/configuration information is 0, the relay disables amplification and forwarding by default. Optionally, this implementation takes effect only for c or d in 2 above.

In an implementation, one slot is separately indicated by a plurality of types of configuration information. If information indicated by the plurality of types of configuration information is completely the same, the relay may randomly select one type of information for execution. If indications of the plurality of types of configuration information are different, how to use the plurality of pieces of indication information needs to be defined. For example, one slot includes 14 OFDM symbols, and the slot is indicated by both first information #1 and first information #2. In this case, the relay may determine, according to a preset rule or an indicated rule, a parameter (beam, on-off, power, or the like) for amplification and forwarding.

Example 1: The first information #1 indicates that all the OFDM symbols in the slot are amplified and forwarded based on a beam #k0, the first information #2 indicates that the symbols 10 to 13 in the slot are amplified and forwarded by using a beam #k1, and #k0 is different from #k1. Further, the relay may determine the following rule: The first information #2 indicates periodic amplification and forwarding, and the first information #1 indicates dynamic amplification and forwarding. In this case, the relay preferentially performs periodic amplification and forwarding (namely, the first information #2). In this case, the relay may perform amplification and forwarding on the symbols 0 to 9 by using the beam #k0, and the relay may perform amplification and forwarding on the symbols 10 to 13 by using the beam #k1. For a specific case, FIG. 8(f) may be used as an example.

In another implementation, a forwarding manner may be further determined based on a priority of a forwarded signal. For example, if a priority of a corresponding forwarded signal (or corresponding forwarding beam) is high in time (for example, the symbols 10 to 13) indicated by first information #2, forwarding is preferentially performed in the time based on the first information #2. For example, a high-priority signal is an SSB, a PRACH, or a SIB1 (or corresponding forwarding beam), a medium-priority signal is a periodic signal or periodic scheduling (for example, configured by using RRC), and a low-priority signal is forwarding indicated by DCI.

In another implementation, amplification and forwarding configuration priorities corresponding to first information #1 and first information #2 may be determined based on configuration information of the base station. For example, the first information #2 further indicates a priority corresponding to the information. If the priority is configured as a first value, in time indicated by the first information #2, a configuration corresponding to the first information #2 is preferentially used to perform amplification and forwarding; otherwise, a configuration corresponding to the first information #1 is used to perform amplification and forwarding.

For another example, if beam switching is performed (or there are a plurality of different beams for forwarding) in one slot, there may be guard time (or switching time) during switching between beams. For example, in Example 1, the symbols 0 to 9 are amplified and forwarded by using the beam #k0, the symbols 10 to 13 are amplified and forwarded by using the beam #k1, and #k0 is different from #k1. In this case, there may be guard time between time for forwarding by using the beam #k0 and time for forwarding by using beam #k1. FIG. 8(g) is used as an example. A symbol 9 is disabled (no signal is forwarded), that is, guard time. Alternatively, a symbol 10 may be disabled (no signal is forwarded), that is, guard time.

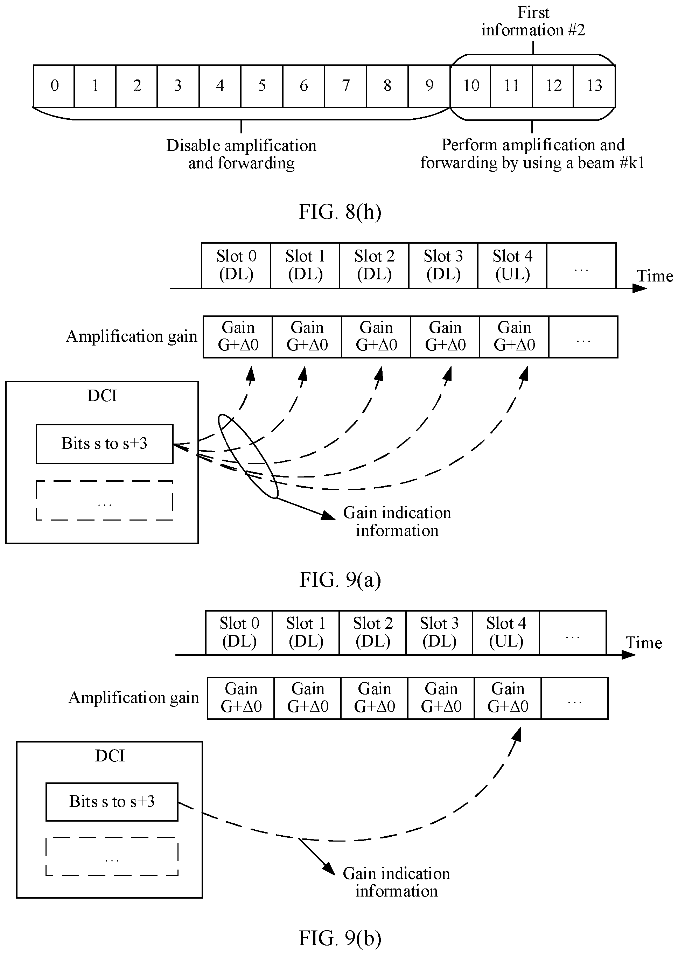

Further, for an OFDM symbol for which no beam is configured and/or not indicated in a slot, amplification and forwarding are disabled by default. In other words, in the slot, the relay does not forward a signal except an OFDM symbol configured for forwarding. For example, in a slot, only symbols 10 to 13 are indicated or configured by the first information #2 to perform amplification and forwarding, and amplification and forwarding are disabled for symbols 0 to 9. Details may be shown in FIG. 8(h).

3. How the first information indicates an amplification gain (or power information, for example, the foregoing EPRE)

The first information includes an index of the amplification gain. After receiving the first information, the relay device determines the amplification gain of the first signal based on the index of the amplification gain.

For example, the index of the amplification gain included in the first information may be indicated at a slot granularity. For example, the first information may indicate the amplification gain at the slot granularity by indicating related information of the forwarding time and the index of the amplification gain.

The following describes a case that in addition to the index of the amplification gain included in the first information, the first information may further implicitly indicate or explicitly indicate the related information of the forwarding time, for example, k and T described above.

a. The first information further implicitly indicates the related information of the forwarding time
b. The first information further explicitly indicates the related information of the forwarding time

The foregoing a and b may be separately implemented in a plurality of manners.

In a first implementation, indication information of the amplification gain herein may be a relative gain, that is, a difference $\Delta$ that is added with reference to an amplification gain G of a signal. For example, refer to a and b in 2. How the first information indicates a beam. The indication information of the beam is replaced with the indication information of the amplification gain. The beam #k0 is replaced with a gain $G + \Delta 0$, the beam #k1 is replaced with a gain $G + \Delta 1$, and so on.

In a second implementation, power indication information herein may refer to a power adjustment, that is, a difference $\Delta$ that is added with reference to a transmit power P of a signal. For example, refer to a and b in 2. How the first information indicates a beam. The indication information of the beam is replaced with the indication information of the amplification gain. The beam #k0 is replaced with a power $P+\Delta 0$, the beam #k1 is replaced with a power $P+\Delta 1$, and so on.

The following uses the first implementation as an example for description. The second implementation is similar to the first implementation, and a difference lies in that: the relative gain is replaced with the power adjustment, and the amplification gain is replaced with the transmit power.

Optionally, amplification gain (or power information) indication manners of downlink amplification and forwarding and uplink amplification and forwarding are different. For example, a downlink amplification gain (or power) is fixed or configured by using RRC, and an uplink amplification gain (or power) is dynamically indicated by using DCI. In other words, DCI indicates only an amplification gain of an uplink slot. Because a downlink receive power is stable, based on this manner, indication overheads can be reduced (that is, indication information of a downlink amplification gain is less or even not required).

c. In an implementation, an amplification gain of a slot in which no amplification gain is configured and/or not indicated may be determined based on a preset gain. The preset gain may be an amplification gain corresponding to predefined time (or signal), or the preset gain is a gain value that is most recently configured.

For example, a slot in which no amplification gain is configured may be understood as a slot in which no amplification gain is configured by using RRC and an amplification gain is indicated by using DCI. A slot in which no amplification gain is indicated may be understood as a slot in which an amplification gain is configured by using RRC and no amplification gain is indicated by using DCI.

For example, if no amplification gain information is configured for a slot in DCI, the preset gain is used as an actual amplification gain of the slot.

For example, a preset gain used for amplification and forwarding in a slot is a gain used when a synchronization/broadcast signal block is amplified and forwarded, or an amplification gain in time in which an SSB is amplified and forwarded. Optionally, a beam in the slot is the same as a relay forwarding beam corresponding to the SSB.

For example, a preset gain used for amplification and forwarding in a slot is a gain used when a CSI-RS is amplified and forwarded, or an amplification gain in time in which a CSI-RS is amplified and forwarded. Optionally, a beam in the time and a relay forwarding beam corresponding to the CSI-RS are the same, or have same QCL information.

For example, a preset gain used for amplification and forwarding in a slot is a gain used when a PRACH signal is amplified and forwarded, or an amplification gain in time in which a PRACH is amplified and forwarded. Optionally, a beam in the time and a relay forwarding beam corresponding to the PRACH are the same, or have same QCL information.

For example, a preset gain used for amplification and forwarding in a slot is a gain used when an SRS is amplified and forwarded, or an amplification gain in time in which an SRS is amplified and forwarded. Optionally, a beam in the time and a relay forwarding beam corresponding to the SRS are the same, or have same QCL information.

For example, a preset gain used during downlink amplification and forwarding may be different from a preset gain used during uplink amplification and forwarding. Specifically, a difference between a gain G0 used during downlink amplification and forwarding and a gain G1 used during uplink amplification and forwarding may be Δ2, that is, G0=G1+Δ2. When Δ2 is less than 0 (that is, a larger gain is used for uplink), an uplink coverage capability is improved.

It should be understood that the preset manner helps reduce signaling overheads, reduce detection performed by the relay on control signaling, and reduce implementation and operation costs of the relay.

d. In an implementation, the DCI includes only a field of the amplification gain.

For example, the amplification gain is for T slots configured by using the DCI. As shown in FIG. 9(a), the T slots include downlink slots and uplink slots. The DCI includes only one field indicating the amplification gain, and the configuration is applicable to the uplink slots and the downlink slots in the T slots.

For another example, the amplification gain is for the uplink slots in the T slots configured by using the DCI, as shown in FIG. 9(b).

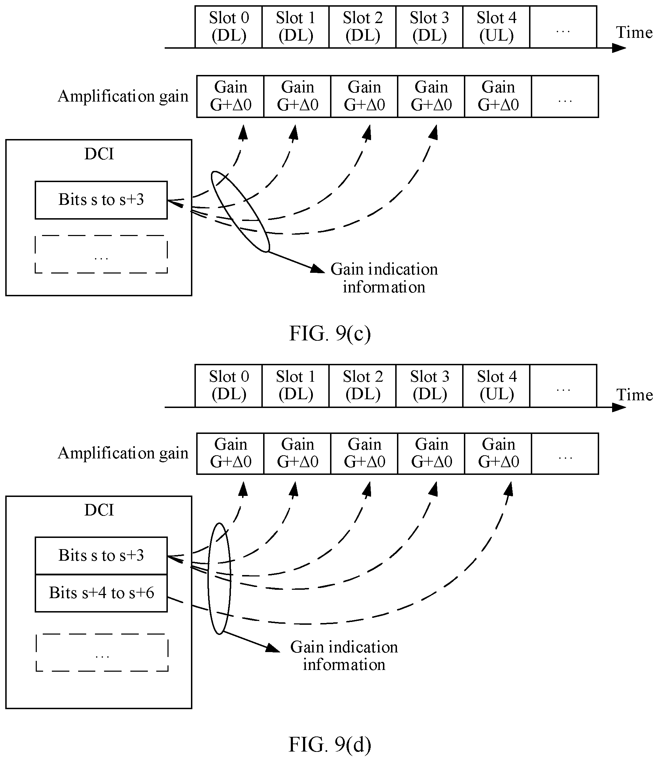

For another example, the amplification gain is for the downlink slots in the T slots configured by using the DCI, as shown in FIG. 9(c).

It should be noted that s, 3, 4, and 6 in FIG. 9(a), FIG. 9(b), and FIG. 9(c) are merely used as examples. This is not limited in this application.

e. In an implementation, two gains are configured by using DCI, respectively for downlink slots and uplink slots in T slots.

Amplification gains of the downlink slots in the T slots are the same, and amplification gains of the uplink slots in the T slots are the same. However, the amplification gains of the uplink slots and the amplification gains of the downlink slots are different, as shown in FIG. 9(d).

It should be understood that, when power configuration information is an amplify-and-forward power, an amplification gain corresponding to the slot may be determined based on a forwarding power and a pathloss reference signal (pathloss reference signal). For example, if the forwarding power is P (whose unit is decibel dBm), and a receive power of the pathloss reference signal is a reference signal received power (reference signal received power, RSRP) (whose unit is decibel dBm), the amplification gain G satisfies: G=P-RSRP. Optionally, the pathloss reference signal may be specified by using network configuration information, and the network configuration information may be, for example, a DCI message or an RRC message. Alternatively, the pathloss reference signal corresponds to a beam index, and the pathloss reference signal is determined based on the beam index.

4. How the first information indicates on-off control

a. Explicit indication

In an implementation, T=5 is used as an example, and a field (bits 0 to 4) indicates on-off information of T slots. A bitmap (bitmap) form is used as an example, that is, one bit corresponds to on-off (ON or OFF) of one slot. For example, as shown in FIG. 10, on-off information of DCI is 10 101. In this case, the corresponding slot 0, slot 2, and slot 4 are in a relay enabled state (that is, a received signal is amplified and forwarded), and other slots are in a disabled state (that is, no signal is forwarded). In other words, in a case that the first information indicates the forwarding time, and further explicitly indicates on-off information of a time unit within the forwarding time, a time unit in which the amplify-and-forward function is enabled is used to forward a signal, and a time unit in which the amplify-and-forward function is disabled is not used to forward a signal.

b. Implicit indication

In another implementation, on-off information is implicitly indicated (or indirectly indicated) by using configuration information other than DCI. For example, if parameter information such as a beam and an amplification gain is configured for the relay in a time period, the relay may be in an "on" state in this time period, and amplify and forward a signal. Otherwise, the relay is in an "off" state in this time period, and the relay does not forward a signal (or is disabled). Further, a default relay mode is determined based on network device indication information or preconfigured information. For example, when the information is 0, the relay enables amplification and forwarding by default; or when the information is 1, the relay disables amplification and forwarding by default. Further, this embodiment takes effect only for the instance in c or d.

c. Different channels/signals have different on-off control mechanisms.

In an implementation, different channels/signals have different on-off control mechanisms. For example, a broadcast channel/signal (such as an SSB, a SIB1, and a PRACH) and the like are implicitly determined based on RRC configuration information, and a user-dedicated (unicast) channel/signal may be determined based on RRC and DCI indication information. The RRC may be used to determine periodically enabled amplification and forwarding, to reduce indication overheads.

In an implementation, time in which the relay forwards an SSB is fixed for enabling amplification and forwarding. Correspondingly, receiving/sending time of a SIB1 and a PRACH corresponding to the SSB is also fixed for enabling amplification and forwarding. In NR, time at which the SSB is sent may be determined based on a time index of the SSB and a sending periodicity of the SSB. A position at which the SIB1 corresponding to the SSB may be sent may also be determined based on the time index of the SSB, and a sending periodicity of the SIB1 may be determined based on indication information of the base station. The PRACH associated with the SSB may also be determined based on a quantity of sent SSBs and PRACH resource configuration information. Therefore, the network device indicates the relay device to forward at least one of an SSB time index (or SSB index), the sending periodicity of the SSB, the sending periodicity of the SIB1, PRACH configuration information, and the like, and the relay device may correspondingly determine time for forwarding the SSB, the SIB1, and the PRACH. Correspondingly, on-off control of the relay device may be designed for channels other than the SSB, the SIB 1, and the PRACH. For example, on-off control (for example, terminal-specific PDSCH, PUSCH, SRS, and CSI-RS) is designed only for a unicast channel of the terminal device.

In an implementation, on-off control is jointly implemented with at least one of beam information, power information, uplink and downlink forwarding direction control information, and the like. Alternatively, at time of a slot or an OFDM symbol, the relay enables or disables the amplify-and-forward function based on beam indication information or power indication information in the time. For example, if relay forwarding beam information is configured in the time, the relay forwarding function is enabled; otherwise, the relay forwarding function is disabled. For another example, if relay forwarding power information is configured in the time, the relay forwarding function is enabled; otherwise, the relay forwarding function is disabled. For another example, if relay uplink or downlink forwarding information is configured in the time, the relay forwarding function is enabled; otherwise, the relay forwarding function is disabled. In this manner, indication overheads can be reduced.

5. How the first information indicates a forwarding direction, that is, the first information indicates to forward a downlink signal and/or is used to forward an uplink signal

For example, the first information is DCI. The DCI includes indication information, and the indication information indicates that the DCI is used only to forward an uplink signal or used only to forward a downlink signal.

In addition, for a combination of the forwarding direction and the foregoing 1 to 4, respectively refer to (3) in a in 1, (7) in b in 1, and c in 3. It should be noted that in the foregoing solutions 1 to 5, a sequence and an adjacent sequence of fields are not limited in this application. In practice, the fields may be in a predefined sequence. For example, the forwarding time, the amplification gain, and the beam index are sequentially arranged. For another example, the forwarding time, the beam index, and the amplification gain are sequentially arranged. For another example, the beam index, the amplification gain, and the forwarding time are sequentially arranged. The amplification gain and the amplification gain may alternatively appear in an interleaving manner, for example, as described in the solution below.

6. How the first information jointly indicates at least two of the foregoing information 1 to 5

   a. The first information may indicate both a beam and an amplification gain.

Example 1: In an example in which the first information is DCI, a quantity of bits for indicating beam information and a quantity of bits for indicating amplification gain information in each field are separately determined based on configuration information, and a total quantity of the two quantities is predefined. As shown in FIG. 11(a), each field jointly indicates a beam and an amplification gain of one slot. Optionally, that each field includes four bits is used as an example. In each field, two fixed bits indicate beam information, and two fixed bits indicate amplification gain information.

In Example 1, bits that are in the DCI and that respectively indicate a beam and an amplification gain in each slot are fixed. In other words, a total quantity of bits that are in the DCI and that indicate a beam and an amplification gain in each slot is also fixed.

Example 2: Although a total quantity of bits indicating a beam and an amplification gain in each slot in the DCI is also fixed, a quantity of bits indicating beam information and a quantity of bits indicating amplification gain information are different in different slots. For example, the quantity of bits indicating the beam information and the quantity of bits indicating the amplification gain information may adaptively change based on a quantity of beams in different slots. More specifically, for example, a total quantity of bits in each slot is four, and a quantity of beams that can be indicated in a slot 0 is three. In this case, two bits indicate a beam, and the remaining two bits indicate a gain. If a quantity of beams that can be indicated in the slot 1 is 2, one bit indicates a beam, and the remaining three bits indicate a gain.

In addition, another example may alternatively be a combination of the foregoing 2 and 3, and details are not described again.

b. The first information may indicate all of a beam, an amplification gain, and forwarding time. A specific manner may be a combination of the foregoing 1, 2, and 3, and details are not described again.

c. The first information indicates all of a beam, an amplification gain, forwarding time, and on-off control. A specific manner may be a combination of the foregoing 1, 2, 3, and 4, and details are not described again.

d. The first information indicates all of a beam, an amplification gain, and on-off control. A specific manner may be a combination of the foregoing 2, 3, and 4, and details are not described again.

e. The first information indicates all of a beam, forwarding time, and on-off control. A specific manner may be a combination of the foregoing 1, 2, and 4, and details are not described again.

f. The first information indicates all of an amplification gain, forwarding time, and on-off control. A specific manner may be a combination of the foregoing 1, 2, and 4, and details are not described again.

The foregoing a to f are merely examples, and this application is not limited to only the foregoing several combinations. The following uses g as an example to describe an implementation in which DCI and RRC jointly indicate the foregoing function.

g. One or more functions (a beam, an amplification gain, on-off control, forwarding time, and a forwarding direction) indicated in the DCI are related to higher layer signaling. The higher layer signaling is configured by using an RRC message, or is configured by using RRC and then activated by a MAC-CE.

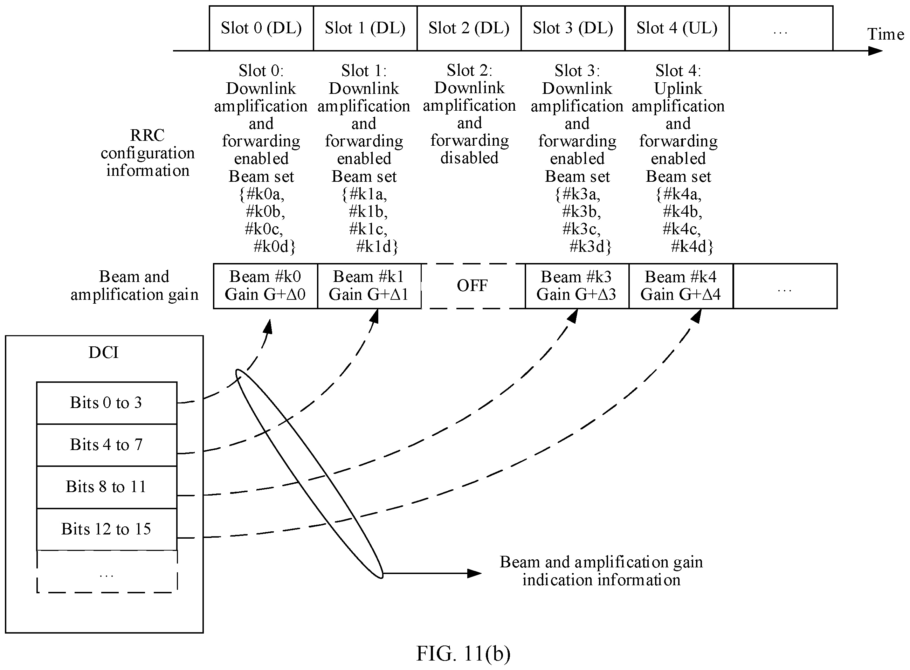

For example, if the RRC is used to configure a pattern (pattern) used for enabling the relay and a pattern of a beam set, the DCI is designed for these patterns, as shown in FIG. 11(b). With reference to a case that the amplify-and-forward function corresponding to the slot 2 in the RRC configuration is disabled, beams and gain information of the slots 0, 1, 3, and 4 are respectively configured in four fields in the DCI. Four bits are configured in each field in the DCI to indicate the beam information and the gain information. A quantity of bits indicating the beam information and the gain information may be determined with reference to the manner in a. The beam information indicated by using the DCI may be indicated based on the pattern of the beam set in the RRC configuration. For a detailed description, refer to the description corresponding to FIG. 8(d).

In another possible implementation, beam sets configured in a slot 0 to a slot 4 in FIG. 11(b) are the same. In other words, the RRC configuration information does not need to indicate a beam set for each slot.

7. How to determine that the first information is used to control the relay device

For example, DCI for controlling the relay may be scrambled by using a dedicated radio network temporary identifier (radio network temporary identifier, RNTI).

For example, a scrambling code may reuse a slot format indicator (slot format indicator, SFI), that is, the DCI for controlling the relay is transmitted by using an SFI-RNTI. For another example, a scrambling code may alternatively be based on an RNTI configured by the network device, for example, an AF-RNTI (amplify and forwarding-RNTI). The AF-RNTI is dedicated to controlling the DCI of the relay. Optionally, the network device may configure a plurality of AF-RNTIs for the relay. For example, an AF-RNTI is configured to forward an uplink signal, and another AF-RNTI is configured to forward a downlink signal. Another example is an NCR-RNTI (network controlled repeater-RNTI).

8. How to determine a size of first information (for example, DCI)

The relay device determines the size of the DCI based on configuration information (for example, RRC), and then receives the DCI.

In a possible implementation, the relay device determines a value of T based on the configuration information, and then determines the size of the DCI based on the value of T and another field indicated by the configuration information.

Example 1: The configuration information indicates a second field, and the relay device determines the size of the DCI based on the second field and T. The second field indicates slot amplify-and-forward configuration, and a maximum value that is configured in the second field and that can be used is n0. For example, $D = T\lceil \log_2 n0 \rceil$ (Formula 4), where D is the size of the DCI.

Example 2: The configuration information indicates a third field, and the relay device determines the size of the DCI based on the third field and T. A maximum value of the third field is n1, where n1 indicates a maximum quantity of beams supported by the relay, or n1 indicates a quantity of beams (or a quantity of activated beams or a quantity of enabled beams) that can be used by the relay device in a configuration. For example, $D = T\lceil \log_2 n1 \rceil$ (Formula 5), where D is the size of the DCI.

Example 3: The configuration information indicates a second field and a third field, and the relay device determines the size of the DCI based on the second field, the third field, and T. For descriptions of the second field and the third field, respectively refer to Example 1 and Example 2. For example, $D = T\left(\lceil \log_2 n1 \rceil + \lceil \log_2 n0 \rceil\right)$ (Formula 6), where D is the size of the DCI.

For example, for specific examples of the second field and the third field in Examples 1 to 3, refer to the descriptions in (1) in a in 1 above.

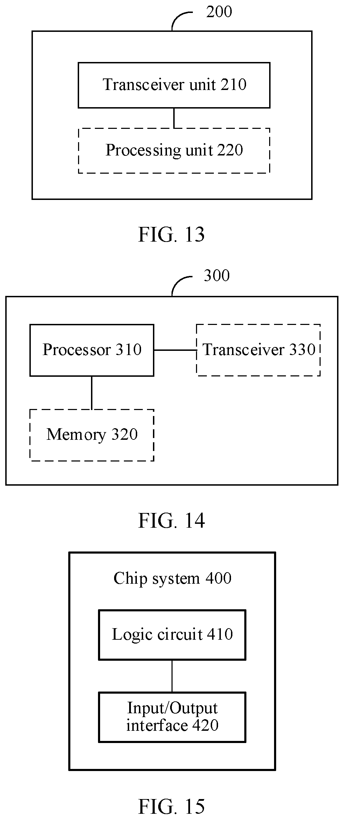

FIG. 13 is a diagram of a relay control apparatus 200 according to an embodiment of this application. The apparatus 200 includes a transceiver unit 210, and the transceiver unit 210 may be configured to implement a corresponding communication function. The transceiver unit 210 may alternatively be referred to as a communication interface or a communication unit.

Optionally, the apparatus 200 may further include a processing unit 220, and the processing unit 220 may be configured to perform data processing.

Optionally, the apparatus 200 further includes a storage unit. The storage unit may be configured to store instructions and/or data. The processing unit 220 may read the instructions and/or the data in the storage unit, so that the apparatus implements actions performed by the communication device (for example, the relay device or the network device) in the foregoing method embodiments.

The apparatus 200 may be configured to perform actions performed by the communication device (for example, the relay device or the network device) in the foregoing method embodiments. In this case, the apparatus 200 may be a component of the communication device (for example, the relay device or the network device). The transceiver unit 210 is configured to perform receiving and sending-related operations on the communication device (for example, the relay device or the network device) side in the foregoing method embodiments. The processing unit 220 is configured to perform processing-related operations on the communication device (for example, the relay device or the network device) side in the foregoing method embodiments.

In a design, the apparatus 200 is configured to perform actions performed by the relay device in the foregoing method embodiments.

In a possible implementation, the transceiver unit 210 is configured to receive first information from a network device, where the first information includes downlink control information, the downlink control information indicates at least one of the following information: a first beam, forwarding time, an amplification gain, and on-off control, the first beam is an access-side beam of the relay device, the forwarding time is a time unit for forwarding a signal, the amplification gain is an amplification multiple or a forwarding power of a signal, and the on-off control is control on enabling or disabling an amplify-and-forward function. The transceiver unit 210 is further configured to receive a first signal from the network device or a terminal device. The transceiver unit 210 is further configured to forward the first signal based on the first information.

For example, the first information further includes a radio resource control message, the radio resource control message is used to determine a relay amplify-and-forward time set and/or configuration information of the relay amplify-and-forward time set, and the relay amplify-and-forward time set includes the forwarding time.

For example, the radio resource control message includes at least two of the following: a first field, a second field, and a third field, where the first field indicates a slot configuration list included in the relay amplify-and-forward time set, the second field indicates a slot amplify-and-forward configuration, and the third field indicates a forwarding beam configuration list.

For example, the radio resource control message is further used to determine a duration of the relay amplify-and-forward time set.

Optionally, the relay amplify-and-forward time set further corresponds to start time of the relay amplify-and-forward time set, and the apparatus further includes the processing unit 220. The processing unit 220 is configured to determine the start time based on time at which the downlink control information is received and effective time, where the effective time is a time interval between the time at which the relay device receives the downlink control information and the start time.

Optionally, the processing unit 220 is further configured to determine the effective time based on capability information of the relay device; or the transceiver unit 210 is further configured to send capability information of the relay device to the network device; and the transceiver unit 210 is further configured to receive the effective time from the network device.

Optionally, the processing unit 220 is specifically configured to determine the effective time based on the capability information of the relay device and second information, where the second information includes at least one of the following: a subcarrier spacing and a carrier frequency range.

Optionally, in a case that the first information includes the downlink control information and the radio resource control message, the processing unit 220 is further configured to determine a size of the downlink control information based on the duration and at least one of the second field and the third field.

For example, the configuration information of the amplify-and-forward time set takes effect periodically, and a time interval for the configuration information of the amplify-and-forward time set to take effect is the duration.

For example, the first information indicates to forward a signal based on the first beam within the forwarding time; or the first information indicates to forward a signal based on the amplification gain within the forwarding time; or the first information indicates to forward a signal based on the first beam and the amplification gain; or the first information indicates to forward a signal in a time unit in which the on-off control indicates to enable the amplify-and-forward function and that is in the forwarding time; or the first information indicates to forward a signal based on the first beam in a time unit in which the on-off control indicates to enable an amplification function; or the first information indicates to forward a signal based on the amplification gain in a time unit in which the on-off control indicates to enable an amplification function; or the first information indicates to forward a signal based on the first beam and the amplification gain within the forwarding time; or the first information indicates to forward a signal based on the amplification gain and the first beam in a time unit in which the on-off control indicates to enable an amplification function; or the first information indicates to forward a signal based on the first beam in a time unit in which the on-off control indicates to enable the amplify-and-forward function and that is in the first forwarding time; or the first information indicates to forward a signal based on the amplification gain in a time unit in which the on-off control indicates to enable the amplify-and-forward function and that is in the first forwarding time; or the first information indicates to forward a signal based on the first beam and the amplification gain in a time unit in which the on-off control indicates to enable the amplify-and-forward function and that is in the first forwarding time.

The apparatus 200 may implement corresponding steps or procedures performed by the relay device in the method embodiments according to embodiments of this application. The apparatus 200 may include units configured to perform the method performed by the relay device in the embodiment shown in FIG. 3(a), FIG. 3(b), or FIG. 3(c).

It should be understood that a specific process in which the units perform the foregoing corresponding steps is described in detail in the foregoing method embodiments. For brevity, details are not described herein again.

In another design, the apparatus 200 is configured to perform actions performed by the network device in the foregoing method embodiments.

In a possible implementation, the transceiver unit 210 is configured to send first information to a relay device, where the first information includes downlink control information, the downlink control information indicates at least one of the following information: a first beam, forwarding time, an amplification gain, and on-off control, the first beam is an access-side beam of the relay device, the forwarding time is a time unit for forwarding a signal, the amplification gain is an amplification multiple or a forwarding power of a signal, and the on-off control is control on enabling or disabling an amplify-and-forward function. The transceiver unit 210 is further configured to send a first signal to the relay device, or the network device receives the first signal from the relay device.

For example, the first information includes a radio resource control message, the radio resource control message is used to determine a relay amplify-and-forward time set and/or configuration information of the relay amplify-and-forward time set, and the relay amplify-and-forward time set includes the forwarding time.

For example, the radio resource control message includes at least two of the following: a first field, a second field, and a third field, where the first field indicates a slot configuration list included in the relay amplify-and-forward time set, the second field indicates a slot amplify-and-forward configuration, and the third field indicates a forwarding beam configuration list.

For example, the radio resource control message is further used to determine a duration of the relay amplify-and-forward time set.

Optionally, the transceiver unit 210 is further configured to receive capability information of the relay device from the relay device.

The apparatus further includes the processing unit 220, where the processing unit 220 is configured to determine effective time based on the capability information of the relay device, where the effective time is a time interval between time at which the relay device receives the first information and start time of the relay amplify-and-forward time set.

The transceiver unit 210 is further configured to send the effective time to the relay device.

The processing unit 220 is specifically configured to determine the effective time based on the capability information of the relay device and second information, where the second information further includes at least one of the following: a subcarrier spacing and a carrier frequency range.

For example, the first information further includes indication information, the indication information indicates that the configuration information of the amplify-and-forward time set takes effect periodically, and a time interval for the configuration information of the amplify-and-forward time set to take effect is the duration.

For example, the first information indicates to forward a signal based on the first beam within the forwarding time; or the first information indicates to forward a signal based on the amplification gain within the forwarding time; or the first information indicates to forward a signal based on the first beam and the amplification gain; or the first information indicates to forward a signal in a time unit in which the on-off control indicates to enable the amplify-and-forward function and that is in the forwarding time; or the first information indicates to forward a signal based on the first beam in a time unit in which the on-off control indicates to enable an amplification function; or the first information indicates to forward a signal based on the amplification gain in a time unit in which the on-off control indicates to enable an amplification function; or the first information indicates to forward a signal based on the first beam and the amplification gain within the forwarding time; or the first information indicates to forward a signal based on the amplification gain and the first beam in a time unit in which the on-off control indicates to enable an amplification function; or the first information indicates to forward a signal based on the first beam in a time unit in which the on-off control indicates to enable the amplify-and-forward function and that is in the first forwarding time; or the first information indicates to forward a signal based on the amplification gain in a time unit in which the on-off control indicates to enable the amplify-and-forward function and that is in the first forwarding time; or the first information indicates to forward a signal based on the first beam and the amplification gain in a time unit in which the on-off control indicates to enable the amplify-and-forward function and that is in the first forwarding time.

The apparatus 200 may implement corresponding steps or procedures performed by the network device in the method embodiments according to embodiments of this application. The apparatus 200 may include units configured to perform the method performed by the network device in the embodiment shown in FIG. 3(a), FIG. 3(b), or FIG. 3(c).

It should be understood that a specific process in which the units perform the foregoing corresponding steps is described in detail in the foregoing method embodiments. For brevity, details are not described herein again.

It should be further understood that the apparatus 200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 200 may be specifically the relay device in the foregoing embodiments, and may be configured to perform procedures and/or steps corresponding to the relay device in the foregoing method embodiments; or the apparatus 200 may be specifically the network device in the foregoing embodiments, and may be configured to perform procedures and/or steps corresponding to the network device in the foregoing method embodiments. To avoid repetition, details are not described herein again.

The apparatus 200 in the foregoing solutions has a function of implementing corresponding steps performed by the relay device in the foregoing methods, or the apparatus 200 in the foregoing solutions has a function of implementing corresponding steps performed by the network device in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to respectively perform sending and receiving operations and related processing operations in the method embodiments.

In addition, the transceiver unit 210 may alternatively be a transceiver circuit (for example, may include a receiving circuit and a sending circuit), and the processing unit may be a processing circuit.

It should be noted that the apparatus in FIG. 13 may be the network element or the device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

FIG. 14 is a diagram of another relay control apparatus 300 according to an embodiment of this application. The apparatus 300 includes a processor 310. The processor 310 is coupled to a memory 320, the memory 320 is configured to store a computer program or instructions and/or data, and the processor 310 is configured to: execute the computer program or the instructions stored in the memory 320, or read the data stored in the memory 320, to perform the method in the foregoing method embodiments.

Optionally, there are one or more processors 310.

Optionally, there are one or more memories 320.

Optionally, the memory 320 and the processor 310 are integrated together, or are disposed separately.

Optionally, as shown in FIG. 14, the apparatus 300 further includes a transceiver 1030. The transceiver 1030 is configured to receive a signal and/or send a signal. For example, the processor 310 is configured to control the transceiver 1030 to receive a signal and/or send a signal.

In a solution, the apparatus 300 is configured to implement operations performed by the relay device in the foregoing method embodiments.

For example, the processor 310 is configured to execute the computer program or the instructions stored in the memory 320, to implement related operations of the relay device in the foregoing method embodiments, for example, the method performed by the relay device in the embodiment shown in FIG. 3(a), FIG. 3(b), or FIG. 3(c).

In a solution, the apparatus 300 is configured to implement operations performed by the network device in the foregoing method embodiments.

For example, the processor 310 is configured to execute the computer program or the instructions stored in the memory 320, to implement related operations of the network device in the foregoing method embodiments, for example, the method performed by the network device in the embodiment shown in FIG. 3(a), FIG. 3(b), or FIG. 3(c).

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other suitable type of memory.

FIG. 15 is a diagram of a chip system 400 according to an embodiment of this application. The chip system 400 (or may be referred to as a processing system) includes a logic circuit 410 and an input/output interface (input/output interface) 420.

The logic circuit 410 may be a processing circuit in the chip system 400. The logic circuit 410 may be coupled to a storage unit, and invoke instructions in the storage unit, so that the chip system 400 can implement the methods and functions in embodiments of this application. The input/output interface 420 may be an input/output circuit in the chip system 400, and outputs information processed by the chip system 400, or inputs to-be-processed data or signaling information to the chip system 400 for processing.

Specifically, for example, if the chip system 400 is installed in the relay device, the logic circuit 410 is coupled to the input/output interface 420, and the logic circuit 410 may send a message to the network device through the input/output interface 420. The message may be generated by the logic circuit 410. Alternatively, the input/output interface 420 may input first information from the network device to the logic circuit 410 for processing. For another example, if the chip system 400 is installed in the network device, the logic circuit 410 is coupled to the input/output interface 420, and the logic circuit 410 may send first information to the relay device through the input/output interface 420. The first information may be generated by the logic circuit 410. Alternatively, the input/output interface 420 may input a message from the relay device to the logic circuit 410 for processing.

In a solution, the chip system 400 is configured to implement operations performed by the relay device in the foregoing method embodiments.

For example, the logic circuit 410 is configured to implement a processing-related operation performed by the relay device in the foregoing method embodiments, for example, a processing-related operation performed by the relay device in the embodiment shown in FIG. 2(a) and FIG. 2(b), FIG. 3(a) to FIG. 3(c), or FIG. 4(a) to FIG. 4(d). The input/output interface 420 is configured to implement an operation related to sending and/or receiving performed by the relay device in the foregoing method embodiments, for example, the operation related to sending and/or receiving performed by the relay device in the embodiment shown in FIG. 2(a) and FIG. 2(b), FIG. 3(a) to FIG. 3(c), or FIG. 4(a) to FIG. 4(d).

In another solution, the chip system 400 is configured to implement operations performed by the network device in the foregoing method embodiments.

For example, the logic circuit 410 is configured to implement a processing-related operation performed by the network device in the foregoing method embodiments, for example, a processing-related operation performed by the network device in the embodiment shown in FIG. 2(a) and FIG. 2(b), FIG. 3(a) to FIG. 3(c), or FIG. 4(a) to FIG. 4(d). The input/output interface 420 is configured to implement an operation related to sending and/or receiving performed by the network device in the foregoing method embodiments, for example, the operation related to sending and/or receiving performed by the network device in the embodiment shown in FIG. 2(a) and FIG. 2(b), FIG. 3(a) to FIG. 3(c), or FIG. 4(a) to FIG. 4(d).

An embodiment of this application further provides a computer-readable storage medium, storing computer instructions used to implement the method performed by the relay device or the network device in the foregoing method embodiments.

For example, when a computer program is executed by a computer, the computer is enabled to implement the method performed by the relay device or the network device in the foregoing method embodiments.

An embodiment of this application further provides a computer program product, including instructions. When the instructions are executed by a computer, the method performed by the relay device or the network device in the foregoing method embodiments is implemented.

An embodiment of this application further provides a communication system. The communication system includes the relay device and the network device in the foregoing embodiments. For example, the system includes the relay device and the network device in the embodiment shown in FIG. 3(a), FIG. 3(b), or FIG. 3(c).

For explanations and beneficial effect of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A relay control method, comprising:

   receiving, by a relay device, first information from a network device, wherein the first information comprises downlink control information, the downlink control information indicates at least one of the following information: a first beam, forwarding time, an amplification gain, and on-off control, the first beam is an access-side beam of the relay device, the forwarding time is a time unit for forwarding a signal, the amplification gain is an amplification multiple or a forwarding power of a signal, and the on-off control is control on enabling or disabling an amplify-and-forward function;
   receiving, by the relay device, a first signal from the network device or a terminal device; and
   forwarding, by the relay device, the first signal based on the first information.

2. The method according to claim 1, wherein the first information further comprises a radio resource control message, the radio resource control message is used to determine a relay amplify-and-forward time set and/or configuration information of the relay amplify-and-forward time set, and the relay amplify-and-forward time set comprises the forwarding time.

3. The method according to claim 2, wherein the radio resource control message comprises at least two of the following: a first field, a second field, and a third field, wherein the first field indicates a slot configuration list comprised in the relay amplify-and-forward time set, the second field indicates a slot amplify-and-forward configuration, and the third field indicates a forwarding beam configuration list.

4. The method according to claim 2 or 3, wherein the radio resource control message is further used to determine a duration of the relay amplify-and-forward time set.

5. The method according to any one of claims 2 to 4, wherein the relay amplify-and-forward time set further corresponds to start time of the relay amplify-and-forward time set, and the method further comprises:
   determining, by the relay device, the start time based on time at which the downlink control information is received and effective time, wherein the effective time is a time interval between the time at which the relay device receives the downlink control information and the start time.

6. The method according to claim 5, wherein

   the method further comprises: determining, by the relay device, the effective time based on capability information of the relay device; or
   the method further comprises: sending, by the relay device, capability information of the relay device to the network device; and
   receiving, by the relay device, the effective time from the network device.

7. The method according to claim 6, wherein the determining, by the relay device, the effective time based on capability information of the relay device comprises:
   determining, by the relay device, the effective time based on the capability information of the relay device and second information, wherein the second information comprises at least one of the following: a subcarrier spacing and a carrier frequency range.

8. The method according to any one of claims 4 to 7, wherein in a case that the first information comprises the downlink control information and the radio resource control message, the method further comprises: determining, by the relay device, a size of the downlink control information based on the duration and at least one of the second field and the third field.

9. The method according to any one of claims 2 to 8, wherein the configuration information of the amplify-and-forward time set takes effect periodically, and a time interval for the configuration information of the amplify-and-forward time set to take effect is the duration.

10. The method according to any one of claims 1 to 9, wherein

the first information indicates to forward a signal based on the first beam within the forwarding time; or
the first information indicates to forward a signal based on the amplification gain within the forwarding time; or
the first information indicates to forward a signal based on the first beam and the amplification gain; or
the first information indicates to forward a signal in a time unit in which the on-off control indicates to enable the amplify-and-forward function and that is in the forwarding time; or
the first information indicates to forward a signal based on the first beam in a time unit in which the on-off control indicates to enable an amplification function; or
the first information indicates to forward a signal based on the amplification gain in a time unit in which the on-off control indicates to enable an amplification function; or
the first information indicates to forward a signal based on the first beam and the amplification gain within the forwarding time; or
the first information indicates to forward a signal based on the amplification gain and the first beam in a time unit in which the on-off control indicates to enable an amplification function; or
the first information indicates to forward a signal based on the first beam in a time unit in which the on-off control indicates to enable the amplify-and-forward function and that is in the first forwarding time; or
the first information indicates to forward a signal based on the amplification gain in a time unit in which the on-off control indicates to enable the amplify-and-forward function and that is in the first forwarding time; or
the first information indicates to forward a signal based on the first beam and the amplification gain in a time unit in which the on-off control indicates to enable the amplify-and-forward function and that is in the first forwarding time.

11. A relay control method, comprising:

sending, by a network device, first information to a relay device, wherein the first information comprises downlink control information, the downlink control information indicates at least one of the following information: a first beam, forwarding time, an amplification gain, and on-off control, the first beam is an access-side beam of the relay device, the forwarding time is a time unit for forwarding a signal, the amplification gain is an amplification multiple or a forwarding power of a signal, and the on-off control is control on enabling or disabling an amplify-and-forward function; and
sending, by the network device, a first signal to the relay device, or receiving, by the network device, a first signal from the relay device.

12. The method according to claim 11, wherein the first information further comprises a radio resource control message, wherein
the radio resource control message is used to determine a relay amplify-and-forward time set and/or configuration information of the relay amplify-and-forward time set, and the relay amplify-and-forward time set comprises the forwarding time.

13. The method according to claim 12, wherein the radio resource control message comprises at least two of the following: a first field, a second field, and a third field, wherein the first field indicates a slot configuration list comprised in the relay amplify-and-forward time set, the second field indicates a slot amplify-and-forward configuration, and the third field indicates a forwarding beam configuration list.

14. The method according to claim 12 or 13, wherein the radio resource control message is further used to determine a duration of the relay amplify-and-forward time set.

15. The method according to any one of claims 12 to 14, wherein the method further comprises:

receiving, by the network device, capability information of the relay device from the relay device;

determining, by the network device, effective time based on the capability information of the relay device, wherein the effective time is a time interval between time at which the relay device receives the first information and start time of the relay amplify-and-forward time set; and

sending, by the network device, the effective time to the relay device.

16. The method according to claim 15, wherein the determining, by the network device, effective time based on the capability information of the relay device comprises:

determining, by the network device, the effective time based on the capability information of the relay device and second information, wherein the second information further comprises at least one of the following: a subcarrier spacing and a carrier frequency range.

17. The method according to claim 14 or 15, wherein the first information further comprises indication information, the indication information indicates that the configuration information of the amplify-and-forward time set takes effect periodically, and a time interval for the configuration information of the amplify-and-forward time set to take effect is the duration.

18. The method according to any one of claims 11 to 17, wherein

the first information indicates to forward a signal based on the first beam within the forwarding time; or

the first information indicates to forward a signal based on the amplification gain within the forwarding time; or

the first information indicates to forward a signal based on the first beam and the amplification gain; or

the first information indicates to forward a signal in a time unit in which the on-off control indicates to enable the amplify-and-forward function and that is in the forwarding time; or

the first information indicates to forward a signal based on the first beam in a time unit in which the on-off control indicates to enable an amplification function; or

the first information indicates to forward a signal based on the amplification gain in a time unit in which the on-off control indicates to enable an amplification function; or

the first information indicates to forward a signal based on the first beam and the amplification gain within the forwarding time; or

the first information indicates to forward a signal based on the amplification gain and the first beam in a time unit in which the on-off control indicates to enable an amplification function; or

the first information indicates to forward a signal based on the first beam in a time unit in which the on-off control indicates to enable the amplify-and-forward function and that is in the first forwarding time; or

the first information indicates to forward a signal based on the amplification gain in a time unit in which the on-off control indicates to enable the amplify-and-forward function and that is in the first forwarding time; or

the first information indicates to forward a signal based on the first beam and the amplification gain in a time unit in which the on-off control indicates to enable the amplify-and-forward function and that is in the first forwarding time.

19. A communication apparatus, comprising:

a processor, configured to execute a computer program stored in a memory, so that the apparatus performs the method according to any one of claims 1 to 10, or the apparatus performs the method according to any one of claims 11 to 18.

20. A computer-readable storage medium, wherein the computer-readable storage medium stores a computer program, and when the computer program is run on a computer, the computer is enabled to perform the method according to any one of claims 1 to 10, or the computer is enabled to perform the method according to any one of claims 11 to 18.

21. A computer program product, wherein the computer program product comprises instructions used to perform the method according to any one of claims 1 to 10, or the computer program product comprises instructions used to perform the method according to any one of claims 11 to 18.

22. A communication system, comprising a terminal device and a network device, wherein

the terminal device is configured to perform the method according to any one of claims 1 to 10, and the network device is configured to perform the method according to any one of claims 11 to 18.

FIG. 1(a)

FIG. 1(b)

FIG. 1(c)

Terminal device 10

Processor 101

Memory 102

Computer program or configuration information

Signal transceiver unit 103

Transmitter 1031

Receiver 1032

$F_{1,1}$

$F_{1,K}$

$G_1$

Antenna 1033

Antenna array 1

$F_{M,1}$

$F_{M,K}$

$G_M$

Antenna array M

FIG. 1(d)

Network
device 101

Relay
device 103

Terminal
device 102

FIG. 2 (a)

Network
device 101

Relay
device 103

Terminal
device 102

FIG. 2 (b)

| UE | Relay device | Network device |
|---|---|---|

S101: First information

S102-b: Forward the
downlink signal

S102-a: Send a
downlink signal

S103-a: Send an
uplink signal

S103-b: Forward the
uplink signal

FIG. 3(a)

UE | Relay device | Network device

S101: First information

S103-a: Send an uplink signal | S103-b: Forward the uplink signal

FIG. 3(b)

UE | Relay device | Network device

S101: First information

S102-b: Forward the downlink signal | S102-a: Send a downlink signal

FIG. 3(c)

$t_0$     $t_1$

k     T

| Slot 0 | Slot 1 | Slot 2 | Slot 3 | Slot 4 | Slot 5 | Slot 6 | Slot 7 | Slot 8 | Slot 9 |

FIG. 4(a)

$t_0$     $t_1$

k     T

| Slot 0 | Slot 1 | Slot 2 | Slot 3 | Slot 4 | Slot 5 | Slot 6 | Slot 7 | Slot 8 | Slot 9 |

FIG. 4(b)

EP 4 510 466 A1

| Slot 0 | Slot 1 | Slot 2 | Slot 3 | Slot 4 | Slot 5 | Slot 6 | Slot 7 | Slot 8 | Slot 9 |

t₀  k  x slots  t₁  T

FIG. 4(c)

| Slot 0 | Slot 1 | Slot 2 | Slot 3 | Slot 4 | Slot 5 | Slot 6 | Slot 7 | Slot 8 | Slot 9 |

t₀  k  t₁  T

x OFDM symbols

FIG. 4(d)

| Slot 0 | Slot 1 | Slot 2 | Slot 3 | Slot 4 | Slot 5 | Slot 6 | Slot 7 | Slot 8 | Slot 9 |

t₀  k  t₁  T'

| ON | OFF | ON | OFF | ON | OFF |

FIG. 5(a)

| Slot 0 (DL) | Slot 1 (DL) | Slot 2 (UL) | Slot 3 (UL) | Slot 4 (DL) | Slot 5 (DL) | Slot 6 (DL) | Slot 7 (UL) | Slot 8 (DL) | Slot 9 (UL) |

t₀  k  t₁  T''

FIG. 5(b)

$t_0$                                    $t_1$                                                    Repeat for x
                                                                                                 periodicities

| | k | | | | T | | | | | | |
|---|---|---|---|---|---|---|---|---|---|---|---|---|
| Slot 0 | Slot 1 | Slot 2 | Slot 3 | Slot 4 | Slot 5 | Slot 6 | Slot 7 | Slot 8 | ... | Slot 9 |

T (x+1)

## FIG. 5(c)

$t_0$                                                              $t_1$

| | | k | | | | | T | | | |
|---|---|---|---|---|---|---|---|---|---|---|
| Slot 0 (DL) | Slot 1 (DL) | Slot 2 (DL) | Slot 3 (DL) | Slot 4 (UL) | Slot 5 (DL) | Slot 6 (DL) | Slot 7 (DL) | Slot 8 (DL) | Slot 9 (UL) |

## FIG. 6

| Slot 0 | Slot 1 | Slot 2 | Slot 3 | Slot 4 | ... | Time |
|---|---|---|---|---|---|---|

$N_{AC}$ beams
of a relay

| Beam #k0 | Beam #k1 | Beam #k2 | Beam #k3 | Beam #k4 | ... |
|---|---|---|---|---|---|

DCI

| Bits 0 to 2 |
| Bits 3 to 5 |
| Bits 6 to 8 |
| Bits 9 to 11 |
| Bits 12 to 14 |
| ... |

Beam indication
information

## FIG. 7(a)

| Slot 0 | Slot 1 | Slot 2 | Slot 3 | Slot 4 | ... | → Time |

$N_{AC}$ beams of a relay

| Beam #k0 | Beam #k1 | Beam #k2 | Beam #k3, #k4 | Beam #k4 | ... |

DCI

| Bits 0 to 2 |
| Bits 3 to 5 |
| Bits 6 to 8 |
| Bits 9 to 11 |
| Bits 12 to 14 |
| Bits 15 to 17 |
| ... |

Beam indication information

FIG. 7(b)

FIG. 8(a)

FIG. 8(b)

Slot 0 | Slot 1 | Slot 2 | Slot 3 | Slot 4 | ... → Time

N_AC beams of a relay

Beam #k0 | Beam #k0 | Beam #k2 | Beam #k2 | Beam #k2 | ...

DCI

Bits 0 to 4

Bits 5 to 7

Bits 8 to 10

...

Time indication information

Beam indication information

FIG. 8(c)

Slot 0 | Slot 1 | Slot 2 | Slot 3 | Slot 4 | ... → Time

RRC configuration information

Beam set {#k0a, #k0b, #k0c, #k0d} | Beam set {#k1a, #k1b, #k1c, #k1d} | Beam set {#k2a, #k2b, #k2c, #k2d} | Beam set {#k3a, #k3b, #k3c, #k3d} | Beam set {#k4a, #k4b, #k4c, #k4d}

N_AC beams of a relay

Beam #k0 | Beam #k1 | Beam #k2 | Beam #k3 | Beam #k4 | ...

DCI

Bits 0 to 4

Bits 5 to 7

Bits 8 to 10

Bits 11 to 13

Bits 14 to 16

Bits 17 to 19

...

Time indication information

Beam indication information

FIG. 8(d)

| Slot 0 | Slot 1 | Slot 2 | Slot 3 | Slot 4 | ... |

Time

$N_{AC}$ beams of a relay

| Beam #k0 | Beam #k1 | Beam #k2 | Beam #k3 | Beam #k4 | ... |

DCI

| Bits 0 to 2 |
| Bits 3 to 5 |
| Bits 6 to 8 |
| ... |

SlotOffset=0

SlotOffset=1

SlotOffset=3

Beam indication information

FIG. 8(e)

First information #1

First information #2

| 0 | 1 | 2 | 3 | 4 | 5 | 6 | 7 | 8 | 9 | 10 | 11 | 12 | 13 |

Perform amplification and forwarding by using a beam #k0

Perform amplification and forwarding by using a beam #k1

FIG. 8(f)

First information #1

First information #2

| 0 | 1 | 2 | 3 | 4 | 5 | 6 | 7 | 8 | 9 | 10 | 11 | 12 | 13 |

Perform amplification and forwarding by using a beam #k0

Disable amplification and forwarding

Perform amplification and forwarding by using a beam #k1

FIG. 8(g)

First
information #2

| 0 | 1 | 2 | 3 | 4 | 5 | 6 | 7 | 8 | 9 | 10 | 11 | 12 | 13 |

Disable amplification
and forwarding

Perform amplification and
forwarding by using a beam #k1

FIG. 8(h)

| Slot 0 (DL) | Slot 1 (DL) | Slot 2 (DL) | Slot 3 (DL) | Slot 4 (UL) | ⋯ | → Time |

Amplification gain

| Gain G+Δ0 | Gain G+Δ0 | Gain G+Δ0 | Gain G+Δ0 | Gain G+Δ0 | ⋯ |

DCI

Bits s to s+3

⋯

Gain indication
information

FIG. 9(a)

| Slot 0 (DL) | Slot 1 (DL) | Slot 2 (DL) | Slot 3 (DL) | Slot 4 (UL) | ⋯ | → Time |

Amplification gain

| Gain G+Δ0 | Gain G+Δ0 | Gain G+Δ0 | Gain G+Δ0 | Gain G+Δ0 | ⋯ |

DCI

Bits s to s+3

⋯

Gain indication
information

FIG. 9(b)

| Slot 0 (DL) | Slot 1 (DL) | Slot 2 (DL) | Slot 3 (DL) | Slot 4 (UL) | ··· |
| --- | --- | --- | --- | --- | --- |

Time

Amplification gain

| Gain G+Δ0 | Gain G+Δ0 | Gain G+Δ0 | Gain G+Δ0 | Gain G+Δ0 | ··· |
| --- | --- | --- | --- | --- | --- |

DCI

Bits s to s+3

···

Gain indication information

FIG. 9(c)

| Slot 0 (DL) | Slot 1 (DL) | Slot 2 (DL) | Slot 3 (DL) | Slot 4 (UL) | ··· |
| --- | --- | --- | --- | --- | --- |

Time

Amplification gain

| Gain G+Δ0 | Gain G+Δ0 | Gain G+Δ0 | Gain G+Δ0 | Gain G+Δ0 | ··· |
| --- | --- | --- | --- | --- | --- |

DCI

Bits s to s+3

Bits s+4 to s+6

···

Gain indication information

FIG. 9(d)

| Slot 0 (DL) | Slot 1 (DL) | Slot 2 (DL) | Slot 3 (DL) | Slot 4 (UL) | ... | Time |
|---|---|---|---|---|---|---|

ON-OFF

| ON | OFF | ON | OFF | ON | ... |
|---|---|---|---|---|---|

DCI

Bits 0 to 4

1   0   1   0   1

FIG. 10

| Slot 0 | Slot 1 | Slot 2 | Slot 3 | Slot 4 | ... | Time |
|---|---|---|---|---|---|---|

Beam and amplification gain

| Beam #k0 Gain G+Δ0 | Beam #k1 Gain G+Δ1 | Beam #k2 Gain G+Δ2 | Beam #k3 Gain G+Δ3 | Beam #k4 Gain G+Δ4 | ... |
|---|---|---|---|---|---|

DCI

| Bits 0 to 3 |
|---|
| Bits 4 to 7 |
| Bits 8 to 11 |
| Bits 12 to 15 |
| Bits 16 to 19 |
| ... |

Beam and amplification gain indication information

FIG. 11(a)

| Slot 0 (DL) | Slot 1 (DL) | Slot 2 (DL) | Slot 3 (DL) | Slot 4 (UL) | ⋯ |
|---|---|---|---|---|---|

Time →

RRC configuration information

| Slot 0: Downlink amplification and forwarding enabled Beam set {#k0a, #k0b, #k0c, #k0d} | Slot 1: Downlink amplification and forwarding enabled Beam set {#k1a, #k1b, #k1c, #k1d} | Slot 2: Downlink amplification and forwarding disabled | Slot 3: Downlink amplification and forwarding enabled Beam set {#k3a, #k3b, #k3c, #k3d} | Slot 4: Uplink amplification and forwarding enabled Beam set {#k4a, #k4b, #k4c, #k4d} |
|---|---|---|---|---|

Beam and amplification gain

| Beam #k0 Gain G+Δ0 | Beam #k1 Gain G+Δ1 | OFF | Beam #k3 Gain G+Δ3 | Beam #k4 Gain G+Δ4 | ⋯ |
|---|---|---|---|---|---|

DCI

| Bits 0 to 3 |
|---|
| Bits 4 to 7 |
| Bits 8 to 11 |
| Bits 12 to 15 |
| ⋯ |

Beam and amplification gain indication information

FIG. 11(b)

FIG. 12(a)

FIG. 12(b)

200

Transceiver unit 210

Processing unit 220

FIG. 13

300

Processor 310 — Transceiver 330

Memory 320

FIG. 14

Chip system 400

Logic circuit 410

Input/Output interface 420

FIG. 15

<div align="center">**INTERNATIONAL SEARCH REPORT**</div>

| International application No. |
|---|
| **PCT/CN2023/086889** |

| A. | CLASSIFICATION OF SUBJECT MATTER |
|---|---|
| | H04B7/155(2006.01)i;H04L5/00(2006.01)i;H04W72/04(2023.01)i |

According to International Patent Classification (IPC) or to both national classification and IPC

| B. | FIELDS SEARCHED |
|---|---|

Minimum documentation searched (classification system followed by classification symbols)
    IPC： H04B H04L H04W

Documentation searched other than minimum documentation to the extent that such documents are included in the fields searched

Electronic data base consulted during the international search (name of data base and, where practicable, search terms used)
    USTXT; EPTXT; WOTXT; CNTXT; CNABS; VEN; WPABSC; CNKI; IEEE: 中继, 转发, 功率, 增益, 波束, 时间, 开启, 关闭, relay, power, gain, beam, time, off, DCI, RRC

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | WO 2022140894 A1 (HUAWEI TECHNOLOGIES CO., LTD.) 07 July 2022 (2022-07-07) description, page 12, lines 1-31 | 1, 10, 11, 18-22 |
| X | WO 2021138919 A1 (HUAWEI TECHNOLOGIES CO., LTD.) 15 July 2021 (2021-07-15) description, page 6, 2nd-to-last line-page 8, line 24, page 11, line 10-page 12, line 37 | 1, 11, 19-22 |
| X | CN 114270910 A (BEIJING XIAOMI MOBILE SOFTWARE CO., LTD.) 01 April 2022 (2022-04-01) description, paragraphs [0145]-[0153] and [0201]-[0229] | 1-5, 9-14, 17-22 |
| X | CN 113972969 A (VIVO COMMUNICATION TECHNOLOGY CO., LTD.) 25 January 2022 (2022-01-25) description, paragraphs [0026]-[0035] | 1-5, 10-14, 18-22 |
| Y | WO 2021138919 A1 (HUAWEI TECHNOLOGIES CO., LTD.) 15 July 2021 (2021-07-15) description, page 6, 2nd-to-last line-page 8, line 24, page 11, line 10-page 12, line 37 | 1-5, 9-14, 17-22 |
| Y | CN 114270910 A (BEIJING XIAOMI MOBILE SOFTWARE CO., LTD.) 01 April 2022 (2022-04-01) description, paragraphs [0145]-[0153] and [0201]-[0229] | 1-5, 9-14, 17-22 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 April 2023** | **18 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/086889**

**C.    DOCUMENTS CONSIDERED TO BE RELEVANT**

| Category* | Citation of document, with indication, where appropriate, of the relevant passages | Relevant to claim No. |
|---|---|---|
| A | CN 112088556 A (GUANGDONG OPPO MOBILE COMMUNICATIONS CO., LTD.) 15 December 2020 (2020-12-15)<br>entire document | 1-22 |

Form PCT/ISA/210 (second sheet) (July 2022)

**INTERNATIONAL SEARCH REPORT**
Information on patent family members

International application No.

**PCT/CN2023/086889**

| Patent document cited in search report | | | Publication date (day/month/year) | Patent family member(s) | | | Publication date (day/month/year) |
|---|---|---|---|---|---|---|---|
| WO | 2022140894 | A1 | 07 July 2022 | None | | | |
| WO | 2021138919 | A1 | 15 July 2021 | CN | 114930920 | A | 19 August 2022 |
| CN | 114270910 | A | 01 April 2022 | None | | | |
| CN | 113972969 | A | 25 January 2022 | WO | 2022017334 | A1 | 27 January 2022 |
| CN | 112088556 | A | 15 December 2020 | TW | 202005321 | A | 16 January 2020 |
| | | | | WO | 2019213959 | A1 | 14 November 2019 |
| | | | | CN | 112088556 | B | 04 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210461277